# EUROPÄISCHE PATENTSCHRIFT

(11) **EP 0 506 799 B1**
(45) Veröffentlichungstag und Bekanntmachung des Hinweises auf die Patenterteilung: **27.07.1994**
(21) Anmeldenummer: 91901768.1
(22) Anmeldetag: 21.12.1990
(51) Int. Cl.: H01F 7/16

(54) **MAGNETANTRIEB MIT PERMANENTMAGNETISCHEM HUBANKER**
MAGNETIC DRIVE WITH PERMANENT-MAGNET SOLENOID ARMATURE
ENTRAINEMENT MAGNETIQUE A INDUIT SOUS FORME D'AIMANT PERMANENT

(30) Priorität: 22.12.1989 DE 3942542
(43) Veröffentlichungstag der Anmeldung: 07.10.1992
(73) Patentinhaber: Lungu, Cornelius, D-77830 Bühlertal (DE)
(72) Erfinder: Lungu, Cornelius, D-77830 Bühlertal (DE)
(74) Vertreter: Köhne, Friedrich, Dipl.-Ing.
(86) Internationale Anmeldenummer: EP9002276
(87) Internationale Veröffentlichungsnummer: WO9110242

(56) Entgegenhaltungen:
- EP-A- 0 213 585
- CH-A- 624 522
- DE-A- 3 046 048
- DE-A- 3 637 115
- FR-A- 2 315 754
- FR-A- 2 460 533
- FR-A- 2 616 959
- GB-A- 2 197 754
- US-A- 2 488 122
- US-A- 3 512 618
- E.P. WOHLFARTH et al.: "Ferromagnetic Materials, A Handbook on the Properties of Magnetically Ordered Substances", Vol. 4, 1988, pages 108-109, Elsevier Science Publishers B.V., (Amsterdam, NL)
- PATENT ABSTRACTS OF JAPAN, Vol. 5, No. 113 (E-66)(785), 22 July 1981, & JP-A-56 051 808
- PATENT ABSTRACTS OF JAPAN, Vol. 4, No. 83 (E-15)(565), 14 June 1980, & JP-A-55 048 908

## Beschreibung

Die Erfindung betrifft einen Magnetantrieb mit mindestens einem, in Bewegungsrichtung magnetisierten, aus einem Permanentmagneten mit zwei weichmagnetischen Polstücken bestehenden Hubanker, der entlang einer gemeinsamen Achse zwischen zwei elektromagnetischen, stets mit gleicher Polarität magnetisierbaren Außenpolen bewegbar ist und dabei axial innerhalb eines Durchbruches eines dritten, zwischen den Außenpolen befindlichen und diesen gegenüber stets mit gegensätzlicher magnetischer Polarität ansteuerbaren Elektromagnetpoles angeordnet ist, wobei dieser Elektromagnetpol aus einem weichmagnetischem Magnetkern und einem den Durchbruch aufweisenden Ringpol besteht und wobei der Ringpol aus einer auf dem Magnetkern gewickelten Wicklung herausragt
Ein solcher Magnetantrieb ist aus der GB-PS 1 068 610 bekannt, und zwar als Magnetantrieb für ein Ventil. Der hier verwendete Permanentmagnet ist bolzenartig schlank ausgebildet und seine Höhe, in Bewegungsrichtung gesehen, ist größer als die des Ringpoles. Infolge der großen Höhe ragt der Permanentmagnet während der Hubbewegung zumindest einseitig, unter Umständen sogar beidseitig, aus dem Ringpol heraus. Das bedeutet, daß die Magnetfeldlinien eine lange Strecke durch das Permanentmagnetmaterial zu durchlaufen haben. Da die relative magnetische Permeabilität der Permanentmagnetwerkstoffe stets niedrig ist, bringt diese längere Strecke der Magnetfeldlinien eine größere Reluktanz des Magnetkreises mit sich, d. h. eine große Magnetfelddichte und damit eine große Magnetkraft läßt sich nur mit einem entsprechend großen Strom erreichen. Das genannte Dokument enthält ferner keine präzisen technischen Angaben über das Material des Permanentmagneten.

Aus einem weiteren Dokument "Ferromagnetic Materials", 'A handbook on the properties of magnetically ordered substances', 1988, Band 4, Seite 108, letzter Absatz bis Seite 109, letzter Absatz, sind für verschiedene Materialien Energieprodukte BHmax von 154 bzw. 215 kJm⁻³ und Remanenz-Induktionen Br von 0,89 bzw. 1,08 bekannt. Es ist in diesem Dokument auch eine Reihe von Anwendungsbereichen für diese permanentmagnetischen Materialien, wie z. B. Schalter, Pumpen, Kupplungen und Bremsen angegeben, es ist aber nichts über die formmäßige Ausgestaltung der Permanentmagneten ausgesagt.

Ein weiteres Dokument GB-A-2 175 452 offenbart ein elektromagnetisch intermittierendes Brennstoffeinspritzventil. Bei dieser Konstruktion sind zwei Spulen mit Abstand voneinander um zwei ebenfalls mit Abstand voneinander angeordneten Weicheisenkernen vorgesehen. Zwischen den beiden letzteren ist ein Permanentmagnet als Armatur beweglich gegen die Kraft einer Schraubenfeder angeordnet. Die Bewegung des Ankers erfolgt entsprechend der elektrischen Steuerung der Spule, womit abwechselnd der Weg des Brennstoffes zu einer Einspritzdüse geöffnet oder geschlossen wird. Der aus einem Permanentmagnet bestehende Anker hat verhältnismäßig große Abmessungen. Außerdem besagt dieses Dokument nichts über eine bestimmte Materialauswahl für den Permanentmagneten.

Aus einem weiteren Dokument EP-A-0 081 605 ist eine bistabile magnetische Anordnung bekannt. Bei dieser Anordnung ist auf einer Montageplatte ein Spulenkörper mit einem darin starr befestigten permanentmagnetischen Kern ortsfest angeordnet. Spulenkörper und Kern sind von einem verschiebbaren Rahmen umgeben, in dessen Seitenwände je ein weiteres Permanentmagnet-Stück angeordnet sind, dessen dem Kern der Spule gegenüberliegende Flächen parallel zu den betreffenden Polflächen des Kerns und senkrecht zur Magnetachse verlaufen. Bei dieser bistabilen magnetischen Anordnung sind also insgesamt drei Permanentmagnete erforderlich, wobei der Magnetkern verhältnismäßig große Abmessungen aufweist. Das Dokument sagt nichts darüber aus, aus welchem speziellen Werkstoff und mit welchen speziellen technischen Werten die Permanentmagnete bestehen sollen.

Dem Stand der Technik nach gibt es darüberhinaus zahlreiche Magnetantriebe mit permanentmagnetischem Anker, der zwischen zwei gleichnamigen Polen bewegbar ist. Die grundsätzlichen Gestaltungsmöglichkeiten für einfache Magnetkreise dieser Art sind damit nahezu ausgeschöpft. Verläßliche praxisnahe Berechnungsverfahren sowie konstruktive Gestaltungskriterien gibt es diesbezüglich jedoch kaum, und diese Art von Magnetantrieben konnte sich bis jetzt kaum durchsetzen, nicht zuletzt mechanischer Unzulänglichkeiten und der Verwendung früherer leistungsschwächerer Magnetwerkstoffe wegen.

Die DE-OS 34 26 688 zeigt einen Magnetantrieb der oben beschriebenen Gattung mit zwei zylindrischen, hintereinander koaxial angeordneten Wicklungen und einem permanentmagnetischen Anker, der mittig innerhalb der Wicklungsbohrung in Achsrichtung bewegbar ist. Diese Anordnung mit zwei Wicklungen gestattet es kaum, daß am Magnetanker Arbeitsvorrichtungen angebracht werden, weil innerhalb der Wicklungsbohrung kein ausreichender Raum ist. Zudem kann sich der Magnetanker wegen der ungünstigen Lage aufheizen und dadurch an permanentmagnetischer Kraft verlieren.

Der Erfindung liegt die Aufgabe zu Grunde, eine neue, besonders einfache Form eines Magnetantriebes mit geeigneten konstruktiven Merkmalen zu schaffen, die unter Berücksichtigung der hohen Leistungsfähigkeit verbunden mit ungünstigen mechanischen Eigenschaften der modernen Permanentmagnetwerkstoffe sich für Miniaturbauweise mit einer so kleinen wie möglichen Ankermasse und vielfältigen Einsatz eignet.

Die gestellte Aufgabe wird gelöst durch die Merkmale des kennzeichnenden Teils des Anspruches 1.

Vorteilhafte Ausgestaltungen der Erfindung ergeben sich aus den Unteransprüchen.

Der bistabile Charakter des beschriebenen Magnetantriebes gestattet, daß dieser mit kurzen Stromimpulsen betätigt wird. Die Impulse können z. B. durch die Aufladung und Entladung eines Kondensators oder einer induktiv-kapazitiven Wicklung, wie aus der DE-OS 36 04 579 bekannt, entstehen. Geeignete Schaltungen dieser Art mit Energiespeicherung gestatten es auch, daß dem Magnetantrieb monostabiles Verhalten verliehen wird.

In der Zeichnung sind Ausführungsbeispiele der Erfindung im Schema dargestellt und zwar zeigen:
Fig. 1a bis d den Magnetantrieb in vereinfachter Form mit dem Hubanker in verschiedenen Stellungen bzw. den Verlauf der auf den Anker wirkenden Kräfte,
Fig. 2a bis e Querschnitte durch den Ringpol (Teil des Wicklungskerns) samt Permanentmagneten, wobei die Schnittebene senkrecht zu der Ankerbewegungsrichtung ist,
Fig. 3a bis d verschiedene Schnitte in der Ebene der Hubachse, d. h. Querschnitte der Pol- und Ankerzone,
Fig. 4 bis 10 Applikationsbeispiele der Erfindung, die verdeutlichen, in welcher Weise im Anker-Polraum angetriebene Arbeitsvorrichtungen mit minimalem Aufwand, möglichst ohne Zusatzteile integriert werden können,
Fig. 11 ein Schaltungsbeispiel zum Betreiben des Magnetantriebes als Schwingmagnet, gespeist von einer Gleichstromquelle.
Fig. 12 eine Ausführungsform des Magnetantriebes mit zweigeteilter Wicklung und unsymmetrischer Gestaltung der Polbereiche,
Fig. 13 die Kennlinien dieses Antriebes,
Fig. 14 eine Variante des Magnetantriebes von Fig. 12 mit nur auf einer Seite der Wicklung angebrachtem Außenjoch,
Fig. 15 ein Applikationsbeispiel des Magnetantriebes nach Fig. 12 oder Fig. 14 für elektromagnetische Schütze,
Fig. 16 eine Seitenansicht zu Fig. 15,
Fig. 17 die Anordnung mehrerer Teilwicklungen um den Hubanker eines Magnetantriebes,
Fig. 18 eine Ausführungsform des Magnetantriebes mit einer innerhalb der Wicklung angebrachten Lamellenfeder.

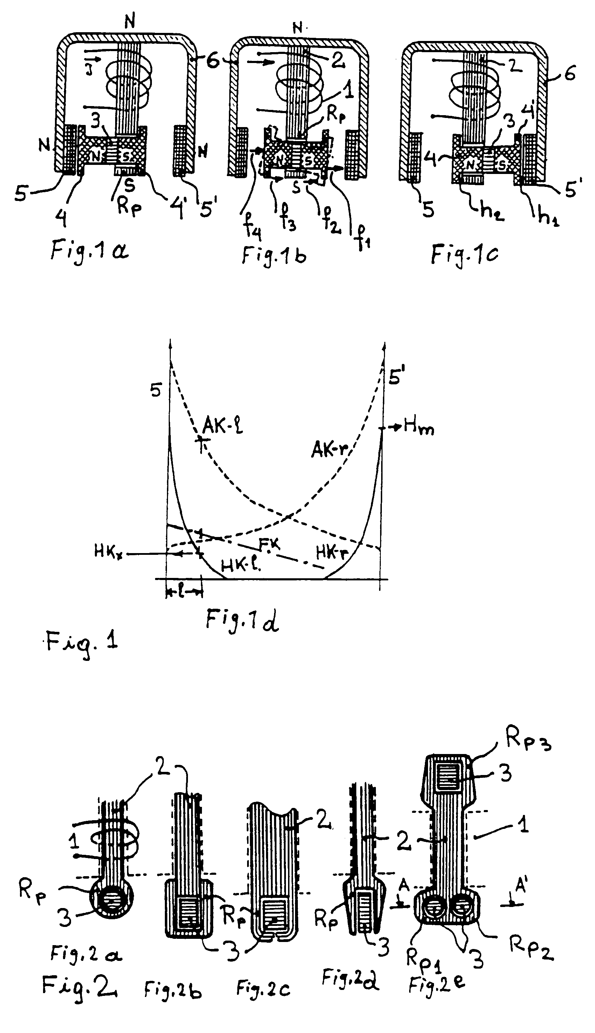

Nach Fig. 1 hat der Magnetantrieb eine Wicklung 1, die über einen Magnetkern 2 gewickelt ist. Der Magnetkern 2 aus weichmagnetischem Material endet nach unten mit einer abgeflachten Zone, die einen Durchbruch aufweist und fortan als Ringpol Rp gezeichnet wird. Dieser ragt aus der Wicklung heraus und hat stets die magnetische Polarität der unteren Wicklungsseite. Innerhalb des Ringpols Rp ist ein Hubanker angeordnet, der waagerecht, also quer zur Wicklungsachse bewegbar ist. Der Hubanker besteht aus einem dünnen, scheibenförmigen, axialmagnetisierten Permanentmagneten 3, der sich zwischen zwei aus weichmagnetischem Material gefertigten Polstücken 4, 4' befindet, die stets die Polarität der Pole des Permanentmagneten 3 annehmen. Wie gezeichnet, hat dann das Polstück 4 stets die Polarität N und der rechte immer die Polarität S.

Der Permanentmagnet 3 besteht aus einem hochwertigen Magnetwerkstoff, wie z. B. SmCo oder FeNdB und muß im Sinne der Erfindung ein Energieprodukt BHmax. von mindestens 100 kJ/m³ aufweisen, bei einer Remanenzinduktion Br von mind. 0,7 T. Dabei bedeuten:
- B: = Induktion
- Br: = Remanenzinduktion
- H: = Koerzitiffeldstärke
- kJ/m³: = Kilo-Joule/Meter³
- Reluktanz: = Widerstand des magnetischen Kreises.

Die Höhe des Permanentmagneten 3 ist auf max. die Hälfte seines Durchmessers beschränkt. Eine Verwendung minderwertiger permanentmagnetischer Werkstoffe würde zu wesentlich größeren Abmessungen und Gewichten des Hubankers führen bei geringerem Wirkungsgrad, von anderen Nachteilen ganz abgesehen. Dies könnte man durch die Notwendigkeit eines größeren Ringpols erklären, der zu mehr "Kurzschlußfeldlinien" zwischen den ebenfalls größeren Außenpolen bzw. dem Ringpol führte.

Der Hubanker 3, 4 wirkt magnetisch mit dem Ringpol Rp und zwei weichmagnetischen Außenpolen 5, 5' zusammen, die stets die Polarität der oberen Seite der Wicklung aufweisen, d. h., wenn die Wicklung von Strom durchflossen ist, nehmen diese Pole 5, 5' eine dem Ringpol Rp entgegengesetzte Polarität an. Damit dies geschieht, ist der Magnetkreis von den Außenpolen 5, 5' zum oberen Ende des Magnetkerns 2 durch ein weichmagnetisches Rückschlußjoch 6 geschlossen.

Für das bessere Verständnis der Erfindung wird der Magnetkern 2 mit Ringpol Rp senkrecht schraffiert und der Permanentmagnet 3 waagerecht. Die Polstücke 4 werden kreuzschraffiert zu 45° dargestellt, die Außenpole 5 kreuzschraffiert in vertikal-horizontaler Richtung, und das Rückschlußjoch 6 erscheint mit einfacher Schraffierung zu 45°.

Teile, die magnetisch nicht wirksam sind, und folglich aus nichtmagnetischem Material bestehen, die z. B. in den Applikationszeichnungen auftauchen (als Teile einer Arbeitsvorrichtung), erscheinen im Querschnitt als punktierte Flächen oder schwarz fettgezeichnet.

Fig. 1a bis c zeigen zum besseren Verständnis der magnetischen Vorgänge den Magnetantrieb mit dem Hubanker in drei Stellungen: links bzw. rechts in stabilen Anschlagstellungen und in der Mitte in einer labilen Übergangsstellung. Der Hubanker 3, 4 kann sich zwischen den seitlichen Außenpolen 5 bewegen. Die Entfernung zwischen den Außenpolen 5, 5' minus Ankerlänge stellt die Hublänge dar, die in Fig. 1d in vergrößertem Maßstab als Entfernung zwischen den linken und rechten Vertikalachsen erscheint. Auf diesen Achsen werden die Kräfte in den entsprechenden Anschlagstellungen als Höhenmaß eingetragen. Stellt man die Betätigungskraft als Höhenmaß oberhalb der waagerechten Abszisse dar, so kann man die Kennlinien der für die Antriebsfunktion maßgebenden Kräfte ermitteln.

Wird die Wicklung 1 von Strom durchflossen (Fig 1a), so entsteht an dem Ringpol Rp des Magnetkerns 2 die Polarität (S) und oberhalb der Wicklung 1 die Polarität (N), die auf die seitlichen Außenpole 5, 5' übertragen wird.

Der Hubanker 3, 4 bewegt sich nach rechts und entwickelt der Stromstärke entsprechend eine hubabhängige Kraft, die den Verlauf der Kennlinie AK-r in Fig. 1d hat (gestrichelt). Diese Kraft setzt sich aus vier Teilkräften f₁ bis f₄ zusammen, die zwischen den elektromagnetischen Polen (Ringpol Rp und Außenpole 5, 5') und den permanentmagnetischen Polen 4, 4' entstehen. Diese Kräfte, erkennbar in Fig. 2b, sind:
f₁ = Anzugskraft zwischen dem rechten Außenpol 5' (N) und dem Polstück 4' (S),
f₂ = Abstoßkraft zwischen dem Polstück 4' (S) des Magnetankers und dem Ringpol Rp (S),
f₃ = Anzugskraft zwischen dem Polstück 4 (N) und dem Ringpol Rp (S),
f₄ = Abstoßkraft zwischen dem linken Außenpol 5 (N) und dem Polstück 4 (N).

Die Komplexität der Kräftebildung (hier vereinfacht dargestellt) erschwert einerseits eine rechnerische Auslegung des Magnetantriebes, gibt jedoch die Möglichkeit, durch entsprechende konstruktive Gestaltung aller Polstücke den Verlauf dieser Kräfte der angestrebten Anwendung anzupassen, wie in der weiteren Beschreibung deutlich wird.

Ändert man die Stromfließrichtung, so ändert sich die Polarität des Ringpols Rp bzw. der Außenpole 5, 5' und damit die Richtung und der Charakter der mit f₁ bis f₄ bezeichneten Kräfte. Statt Anzugskräfte entstehen jetzt Abstoßkräfte und umgekehrt. Aus der rechten Anschlagstellung (Fig. 1c) bewegt sich der Hubanker 3, 4 nach links. Die Betätigungskraft hat einen Verlauf der Kennlinie AK-l entsprechend. Die Betätigungskräfte AK-l und AK-r haben einen Verlauf, der von Strom, Hubstellung und Bewegungsgeschwindigkeit abhängig ist.

Wenn der Strom unterbrochen wird, bleibt der Hubanker 3, 4 in der zuletzt erreichten Endstellung und haftet am jeweiligen Außenpol 5 oder 5' mit einer Kraft, die durch Feldlinien des Permanentmagneten 3 hervorgerufen wird. Diese Kraft setzt sich hauptsächlich aus zwei Teilkräften (s. Fig. 1c) zusammen:
h₁ die zwischen dem Außenpol 5' und dem Polstück 4' des Hubankers 3, 4 entsteht und
h₂ die zwischen dem Polstück 4 und dem Ringpol Rp entsteht.

Ausgehend vom Nordpol des Permanentmagneten 3 schließt sich der Magnetkreis über dem Polstück 4, dem Ringpol Rp, Magnetkern 2, Rückschlußjoch 6, Außenpol 5, Polstück 4' und zurück zum Permanentmagneten 3.

Diese Kraft mit einem Höchstwert Hm bei geschlossener Luftspalte zwischen Außenpol 5'-Polstück 4' und Polstück 4 -Ringpol Rp nimmt rapide ab, wenn man diese Luftspalte vergrößert, was einer Verschiebung des Hubankers nach links entspricht, und zwar einer Kennlinie nach, die etwa dem Verlauf HK-r folgt. Das gleiche gilt für die linksseitige Stellung des Hubankers, wobei die Haltekraft einen Verlauf der Kennlinie HK-1 hat. Der Magnetkreis schließt sich diesmal über die linke Hälfte des Rückschlußjoches 6.

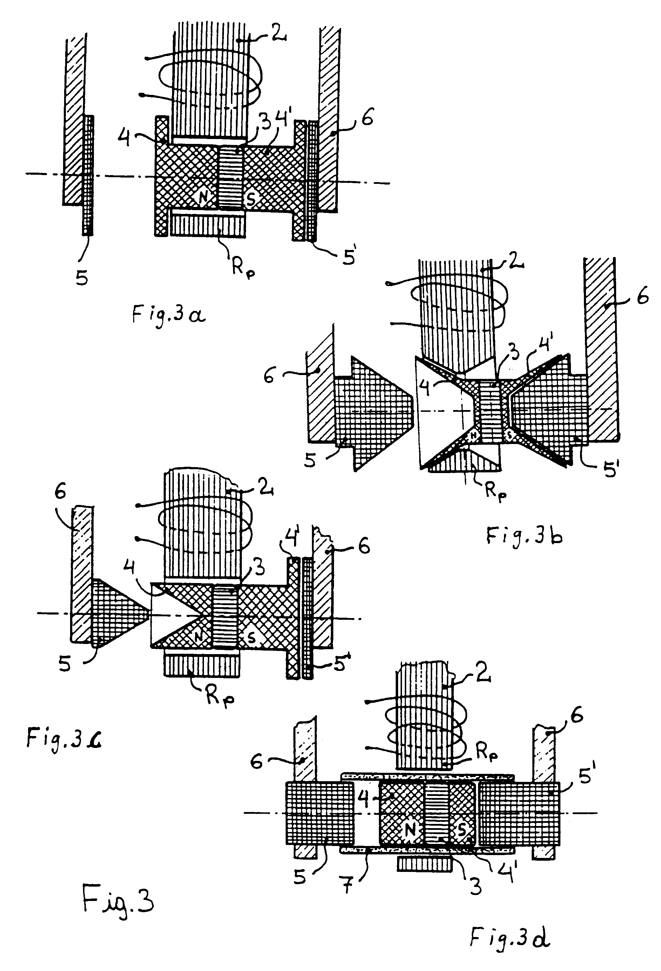

Der beschriebene Magnetantrieb ist vielseitig einsetzbar, weil er gestattet, hohe Kräfte in beide Richtungen zu entwickeln, wobei der Energieverbrauch (impulsartig) extrem gering ist. Die kleine Masse des Magnetankers erlaubt es, diesen Antrieb als Schwingmagneten einzusetzen (z. B. für Pumpen, Rasierapparate ...), wobei die Ansteuerung mit Wechselstrom erfolgt. Bei Gleichstrombetrieb kann der Magnetantrieb bei Erreichen der Endstellungen die Stromrichtungsumkehr selbst steuern, am einfachsten über Kontakte. Die Anordnung des Hubankers an der Seite der Wicklung gestattet es, diesen direkt mit der Arbeitsvorrichtung (Kontakte, Pumpen oder Ventilelemente, Arbeitszylinder, Kupplungsscheiben ...) zu verbinden und kompakte Funktionseinheiten zu bauen. Bei Schwingantrieben wird das Aufheizen der seitlich gelegenen Arbeitsvorrichtung vermieden. Die Gestaltung der magnetisch und mechanisch relevanten Teile und deren Ausführung (einteilig oder mehrteilig) geschieht nach Kriterien, die den Vorrang der magnetischen Gegebenheiten berücksichtigen, um bestimmte Kennlinienverläufe zu erreichen. Dies muß jedoch die mechanisch-technologischen Einzelheiten des Anwendungsfalles berücksichtigen, was meistens zu einer magnetisch gesehen ungünstigen Teilung des Magnetkreises führt. Die Ausführungsbeispiele der Erfindung zeigen, wie ein Optimum unter diesen gegensätzlichen Voraussetzungen erreicht wird. Der Magnetkern 2, das Rückschlußjoch 6 und die Außenpole 5 werden aus weichmagnetischem Material mit ausreichender Permeabilität hergestellt, wofür u. a. die üblichen Stahlsorten gut geeignet sind. Bei Schwingmagneten oder Antrieben mit hoher Reaktionsgeschwindigkeit empfiehlt sich eine geblechte Ausführung oder die Verwendung von siliciumhaltigem weichmagnetischen Stahl, der eine schlechtere elektrische Leitfähigkeit hat. Figur 2 zeigt senkrecht zur Bewegungsrichtung des Hubankers 3, vier Querschnitte durch den Ringpolbereich des Magnetkerns 2, wobei in Figur 2e ein Magnetkern 2 mit drei Ringpolzonen (Rp 1-3) gezeigt wird, der einem Antrieb mit drei Hubankern entspricht. Es ist ersichtlich, daß die Form der Durchbrüche der Form des Permanentmagneten 3 bzw. der der Polstücke 4 entspricht, so daß unter Berücksichtigung technologisch bedingter Luftspalten eine möglichst verlustarme Übertragung der Magnetfeldlinien zwischen Hubanker 3, 4 und Ringpol Rp stattfindet. Die Höhe des Ringpols Rp und der Querschnittsverlauf in Bewegungsrichtung des Hubankers sind so gewählt, um den Übergang der Feldlinien zu optimieren, wie in Fig. 3a-d dargestellt. Die dem Hubanker 3, 4 zugewandten Ringpolflächen sind entsprechend der Hubankerform flach und zylindrisch (Fig. 3a), können auch wie in Fig. 3b abgebildet, teils schräg verlaufen, wenn dies der Form der Außenflächen der Polstücke 4, 4' entspricht. Die Polstücke 4, 4' werden aus weichmagnetischem Material hergestellt und stehen in Kontakt mit dem Permanentmagneten 3, sind also verlängerte Magnetpole und können durch zweckmäßige Anpassung außerdem mechanisch funktionelle Aufgaben als Kolben, Ventilglied usw. erfüllen. Die Polstücke 4, 4' aus preiswertem, leicht bearbeitbarem Stahl ergänzen den Hubanker 3, 4 und gestatten einerseits, daß der Permanentmagnet 3 einfach und klein bleibt, andererseits, daß der Abstand zwischen Ringpol Rp und Außenpolen 5, 5' groß gehalten wird, um einen direkten Feldlinienanschluß zwischen den elektromagnetischen Polen (Rp, 5, 5') zu verhindern. Die im Polbereich verbreiterte (Fig. 3a) oder trichterförmige (Fig. 3b) Gestaltung der Polstücke 4, 4' beabsichtigt einerseits, daß diese in möglichst hohem Umfang den direkten Feldlinienschluß zwischen den Elektromagnetpolen (Rp, 5, 5') verhindert, andererseits, daß die wirksame Polfläche größer wird, um Luftspaltverluste zu reduzieren. Angesichts funktionellwirtschaftlicher Überlegungen ist es nicht immer möglich, den Antrieb magnetisch zu optimieren, es können daher zum Teil magnetisch ungünstigere Polstückformen gewählt werden wie z. B. in Fig. 3c gezeigt.

Um auf der linken Seite den Hubankerdurchmesser klein zu halten, wurde hier ein zylindrisches Polstück 4 gewählt, das eine trichterförmige Vertiefung hat. Dadurch wird das Polstück leichter und die dem Anschlagpol 5 zugewandte Fläche größer.

Das Polstück 4' hat eine dem Außenpol 5' zugewandte große, zu der Bewegungsrichtung senkrecht stehende Polfläche, die eine optimale Kraftentwicklung zuläßt.

Wo es mehr auf Einfachheit ankommt als auf die Optimierung des Wirkungsgrades, können Polstückformen 4', 4 wie in Fig. 3d (zylindrisch) gewählt werden, die bei Bedarf durch unterschiedliche Längen unterschiedliche Kennlinienverläufe bei Links- und Rechtsbetätigung zulassen. Für die Gestaltung der den Luftspalten zugewändten Polflächen gelten die in der Magnettechnik bekannten Kenntnisse wie z. B.:
- größere ebene Polflächen wie in Fig. 3a führen in der Regel bei gleichem Hub zu höheren Anfangskräften, also flacheren Kennlinien AK (Fig. 1d) und höheren Wirkungsgraden.
- die Polflächenvergrößerung durch kegelförmige Gestaltung, wie in Fig. 3b, gestattet bei gleicher Anfangskraft größere Hublängen, verringert aber die Kräfte zum Hubende, bringt also sehr flache Kennlinien.
Je nach Anftriebszweck können verschiedene Polstückformen 4, 4' und Abmessungen gewählt werden, die nord- bzw. südpolseitig unterschiedlich sein können.

Fig. 3b zeigt eine gewichts- und wirkungsgradoptimierte Gestaltung der Polflächen. Die Polstücke 4, 4'sind auf der Innen- bzw. Außenseite besonders großflächig bei geringer Wandstärke, d. h. geringem Gewicht und gestatten durch die Schräge verhältnismäßig große Hübe mit leicht ansteigender Kennlinie.

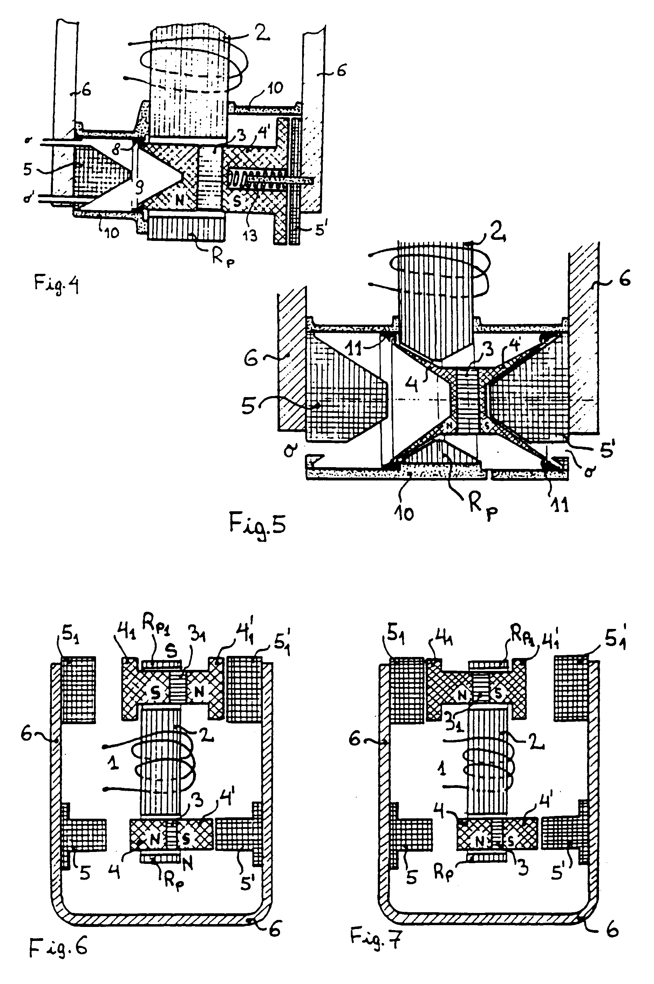

Eine solche Bauform, wie die in Fig. 3a, empfiehlt sich für den Antrieb von Pumpen und Kompressoren, Verriegelungsvorrichtungen, Schwingtüren, Schütze, Schieberventile oder als Proportionalmagnet. Die Außenpole 5, 5'haben eine Form, die der Form der Polstücke 4, 4'angepaßt ist, wie aus Fig. 3 ersichtlich und werden koaxial zur Achse des Hubankers 3, 4 angeordnet. Da Außenpole 5, 5' und Rückschlußjoch 6 ähnliche magnetische Eigenschaften haben, ist es u. U. möglich, daß die ersteren als angeformte Verlängerung des Rückschlußjoches 6 gebildet sind. Für die gute Funktion des Magnetantriebes ist eine möglichst genaue Positionierung der Elektromagnetpole wie Ringpol Rp und Außenpole 5, 5' notwendig. Diese Positionierung kann mit Hilfe eines nichtmagnetischen (z. B. aus Kunststoff, oder unter Druck gegossene Metallegierung) Befestigungskörpers 10, der am Magnetkern 2 unmittelbar hinter dem Ringpol Rp befestigt ist und die kürzeste mechanische Brücke zwischen dem Ringpol Rp und den Außenpolen 5, 5' bildet, erfolgen. (s. Applikationsbeispiel ab Fig. 4). Die Außenpole 5 sind an diesem Befestigungskörper 10 angebracht, der auch eine Gleitführungsfunktion für den Hubanker 3, 4 hat oder als Träger der übrigen Teile einer Arbeitsvorrichtung dient. Der Befestigungskörper 10 kann also unabhängig von den magnetischen Gegebenheiten zweckgebunden, also "kundenspezifisch" gestaltet werden, wie die Applikationsbeispiele zeigen. Dieser Befestigungskörper gestattet es, daß das Rückschlußjoch 6 und die Wicklung 1 ohne Auseinandernehmen des Magnetpolbereiches abmontiert werden können, was oft erwünscht ist. Der Wicklungskörper der Wicklung 1 kann auch als Verlängerung des Befestigungskörpers 10 gestaltet werden.

Wenn man die Fig. 1b betrachtet und die Tendenz eines jeden Magneten berücksichtigt, sich an weichmagnetische Teile anzuziehen und an diesen zu haften, ergibt sich die Notwendigkeit einer mechanischen Führung des Hubankers 3, 4, weil dieser sonst kippen und am Ringpol reiben würde (gestrichelt gezeichnet), was einer normalen Funktion im Wege steht. Üblich ist bei Magnetantrieben eine Führung des Hubankers über eine dünne Schub- bzw. Hubstange, die hier durch den Permanentmagneten 3, die Polstücke 4 und die Außenpole 5 verlaufen würde. Als Material kämen Edelstahl (nicht magnetisch) oder andere teure Legierungen infrage. Der Magnet 3 muß eine Bohrung haben, ist dadurch wesentlich teurer und hat weniger Querschnittsfläche. Solche Nachteile lassen sich vermeiden, wenn der Hubanker 3, 4 samt Polstücken 4 in einer Führungshülse 7 am Außenumfang befestigt wird, was eine Durchbohrung des Permanentmagneten 3 vermeidet. Diese Hülse 7 kann sich über die Hubankerlänge hinaus erstrecken und gleitet einer Gleitlagerung ähnlich über die Außenpole 5 (Fig. 3d), an deren Umfang nur wenig Feldlinien aus diesen Polen austreten. Mit Hilfe dieser Führung wird eine Gleitreibung im Innern des Rinpoles vermieden, wo als Folge des Magnetfeldüberganges sich magnetische Partikel ansammeln könnten. Mittels dieser im Verhältnis zum Durchmesser langen Hülse, die aus nichtmagnetischem Material (Metall oder Kunststoff) besteht, wird ein Kippen des Hubankers verhindert. Die Hülse 7 kann Elemente einer Arbeitsvorrichtung tragen oder gegenüber den Außenpolen 5 wie ein beweglicher Zylinder dichtend wirken, wobei der Außenpol als stehender Kolben gilt. Je nach Anwendungsfall kann die Hülse 7 ein- oder mehrteilig sein und der anzutreibenden Vorrichtung angepaßt. Die Fig. 4 u. 5 zeigen insbesondere Ausgestaltungen des Bereiches Hubanker-Ringpol-Außenpole, die für unterschiedliche Anwendungen geeignet sind. Fig. 4 zeigt einen Magnetantrieb entsprechend Fig. 3c, an dem mechanische Elemente einer Kolbenpumpe angebracht sind. Um den Außenpol 5 wurde ein Befestigungskörper 10 angebracht, der für das Polstück 4 als Kompressionszylinder dient. Um diesen Zweck zu erfüllen, trägt das Polstück 4 eine Dichtlippe 8. Der Außenpol 5 dient als Zylinderboden für den Hubraum 9 und kann strömungsführende Bohrungen o, o' aufweisen, an denen Ventile (nicht gezeichnet) angebracht werden können. Das Polstück 4' weist eine Bohrung auf, die eine nichtmagnetische Druckfeder 13 aufnimmt, deren Zweck es ist, die während der Bewegungen nach rechts des Hubankers entwickelte Hubarbeit teilweise zu speichern und diese in der Bewegungsrichtung nach rechts (Kompressionsarbeit) als Nutzkraft zurückzugeben. Diese Bauform mit einseitiger Federkraftunterstützung ist einfach und eignet sich für mittlere Drucke bzw. Hübe.

Figur 5 zeigt ein Anwendungsbeispiel des Antriebes nach Figur 3b als beidseitig wirkende Pumpe für geringeren Druck und größere Strömungsmengen. Der besonders leichte Hubanker 3, 4 trägt am Rande der trichterförmigen Polstücke 4, 4' Dichtlippen 11, die z. B. aus einer PTFE-Mischung bestehen. Diese dienen gleichzeitig als Führungen in dem Befestigungskörper-Kompressionszylinder 10, der sich über die Außenpole 5, 5' erstreckt, die den Zylinder 10 abschließen, schließen, wobei Strömungsöffnungen o ggf. mit Ventilen je nach Bedarf in den Außenpolen 5, 5' oder in den Zylinderwänden oder den Polstücken 4, 4' praktiziert werden können. Fig. 6 zeigt einen Querschnitt durch einen Magnetantrieb mit zwei Hubankern, die an beiden Seiten der Wicklung untergebracht sind, wobei der Magnetkern 2 zwei Ringpolzonen, ähnlich wie in Fig. 2e, hat. Der Einfachheit halber ist hier nur eine mittige Bohrung im unteren Teil des Ringpols Rp gezeichnet. Das Rückschlußjoch 6 erstreckt sich jetzt über die unteren 5, 5' und oberen 5₁, 5₁' Außenpole und verbindet diese über eine weichmagnetische Jochstrecke mit möglichst niedriger Reluktanz. Für die Klarheit der zeichnerischen Darstellung ist das Jochstück, das die seitlichen Außenpole 5, 5' und 5₁' 5₁' magnetisch miteinander verbindet, unten gezeichnet, in der Praxis ist es jedoch günstiger, dieses seitlich der Wicklung unterzubringen. Der obere Hubanker 3₁' 4₁ ist gegenüber dem unteren entgegengesetzt magnetisiert, also mit dem Südpol nach links. Ein Steuerimpuls ausreichender Stärke, angesichts der zwei Luftspalten zwischen den Außenpolen 5, 5₁ und den Polstücken 4, 4₁, der am oberen Ringpol Rp₁ die Polarität 8 und am unteren die Polarität N hervorruft, wird dazu führen, daß beide Hubanker sich nach links bis zum Anschlag mit den Außenpolen 5, 5₁ bewegen. Die Steuerung nach rechts erfolgt mit einem Impuls entgegengesetzter Polarität. Falls der obere Hubanker mit einem stärkeren Magneten 3₁, ausgestattet ist, kann die Bewegung des unteren Hubankers 3, 4 in der entgegengesetzten Stellung auch durch die mechanische Verschiebung des oberen Hubankers 3₁, 4₁ der gleichen Richtung erfolgen. Die zur Einleitung der Bewegung geeignete Polarität der unteren Außenpole 5, 5', wie auf Seiten 3 und 4 beschrieben, wird dann vom oberen Hubanker vorgegeben.

Ein Magnetkreis dieser Art kann vielfältig genutzt werden z. B.:
- als Magnetantrieb mit zwei Arbeitsankern,
- als Magnetantrieb mit einem unsichtbaren, z. B. in einer Ventilkammer eingeschlossenen Arbeitsanker, wobei der zweite Hubanker eine Stellungsanzeige betätigt,
- als Magnetantrieb mit mehreren räumlich getrennten Hubankern, manueller Notbetätigung und Stellungsanzeige, wobei der stärker dimensionierte, der Handbetätigung zugängliche Hubanker mit Stellungsanzeigefunktion das magnetische Feld für die Bewegung der übrigen Arbeitsanker anstelle der Wicklung liefern kann.

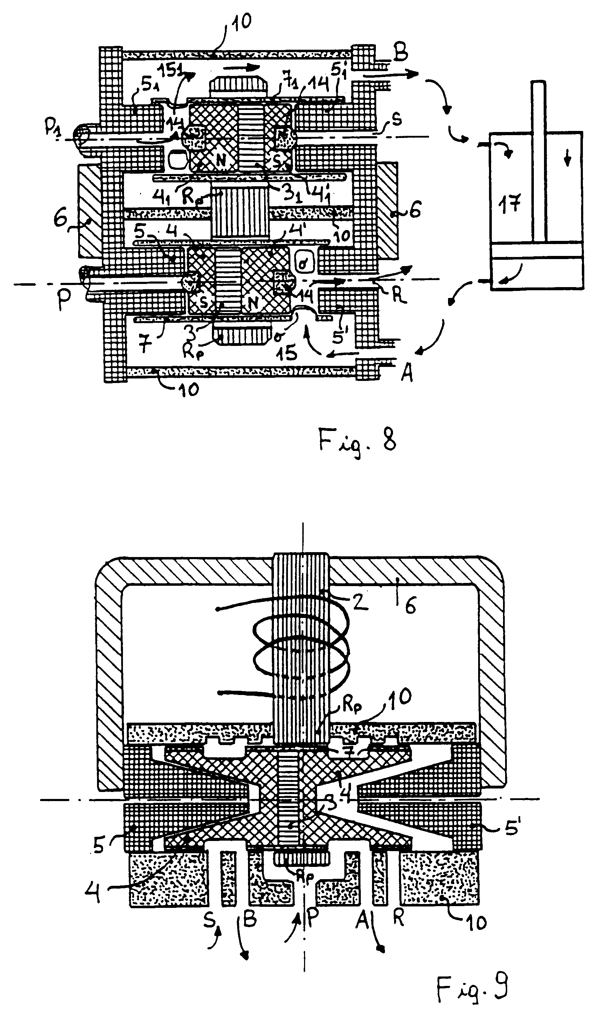

Figur 7 zeigt einen Magnetkreis ähnlich wie in Figur 6 mit zwei Hubankern 3, 4 und 3₁, 4₁, die diesmal in der gleichen Richtung (mit den N-Polen nach links) magnetisiert sind, und der dem oben bechriebenen in der Funktion gleich ist mit dem Unterschied, daß bei elektrischer Steuerung die Hubanker sich in entgegengesetzten Richtungen bewegen.

Wie in Fig. 2e angedeutet, besteht die Möglichkeit, mehrere Hubanker 3, 4 an der gleichen Seite der Wicklung 1 unterzubringen, die sich parallel zueinander bewegen und die in der gleichen Richtung oder entgegengesetzt magnetisiert sind. Bei gleichgerichteter Polarität verhalten sich magnetisch gesehen zwei benachbarte Hubanker wie ein einziger, können sich jedoch in getrennten Räumen oder Medien z. B. in Flüssigkeiten bewegen.

Figur 8 zeigt einen Querschnitt durch die Hubankerpolzonen eines für Magnetventile angepaßten Magnetantriebes mit zwei benachbarten, in entgegengesetzte Richtung magnetisierten Hubankern, der der Schnittebene A, A'in Figur 2e entspräche. Die Hubanker mit dem Permanentmagneten 3 (unten) bzw. 3₁ (oben) und den Polstücken 4, 4'und 4₁, 4₁'haben Ventilkegel 14, die in die Polstücke eingelassen sind. Die Außenpole 5, 5' haben gegenüber den Polstücken 4, 4'und 4₁ und 4₁, 4₁' Polfortsätze mit Druckleitungen P, P₁ und Entleerungsleitungen R, S, die von den Ventilkegeln 14 je nach Stellung der Hubanker 3, 4 und 3₁, 4₁ wechselweise abgesperrt werden können. Die Außenpole 5, 5' können auch mehrteilig ausgeführt werden und habe eine gute magnetische Verbindung zum Rückschlußjoch 6. Die Hubanker 3, 4 und 3₁, 4₁ sind in Führungshülsen 7, 7₁ eingefaßt, die über die Fortsätze der Außenpole 5 gleiten und Öffnungen o aufweisen, durch die eine Fluidströmung (mit Pfeilen gezeichnet) in die Ventilkammern 15, 15₁ gelangen kann. Die Hubanker 3, 4 und 3₁, 4₁ samt Führungshülsen 7, 1₁ und Ventilkegel 14 dienen hier als Ventilglieder und bewegen sich innerhalb der zwei Durchbrüche des Rinpols Rp. Die Ventilkammern 15, 15₁, die zwischen den Außenpolen 5 und um die Ventilglieder herum aufgebaut sind, haben nicht magnetische, dichte Druckkammerwände 10, z. B. aus Metall, Epoxydharz oder Kunststoff, die auch als Befestigungskörper dienen. Diese trennen die die Ventilglieder umgebenden Räume voneinander ab und sind mit Leitungen verbunden, die z. B. zu einem doppelt wirkenden Pneumatikzylinder 17 führen.

Wenn die Strömungsleitungen p, P₁ des Außenpoles 5 mit einer Druckluftquelle verbunden sind (die Entlüftungsleitungen R, S münden in der Atmosphäre), gerät die Druckluft über die Öffnungen o des oberen Ventilgliedes, über die Ventilkammer 15₁, den Arbeitsanschluß B und die Rohrleitungen bis oberhalb des Kolbens des Pneumatikzylinders 17 und drückt diesen nach unten. Der Raum unterhalb des Kolbens ist mit der Atmosphäre über die untere Strömungsleitung verbunden. Wird nun das Ventil geschaltet, so ändern beide Hubanker-Ventilglieder des Magnetventils nahezu gleichzeitig ihre Stellung; es werden also die Strömungsleitungen P und S geöffnet, und die bisher geöffneten Strömungswege P₁ und R werden verschlossen. Die Druckluft gerät über den Arbeitsanschluß A unter den Kolben des Pneumatikzylinders 17, und dieser bewegt sich nach oben, da die Druckkammer oberhalb des Kolbens sich in die Atmosphäre über den Strömungsweg S entladen kann. Das beschriebene Applikationsbeispiel zeigt also den einfachen Bau einer mit einer einzigen Wicklung steuerbaren Einheit aus zwei drei/zwei Wegeventilen drei Wege, zwei Schaltstellungen), die die Funktion eines fünf/zwei Ventils ausüben, z. B. zur Betätigung beidseitig wirkender Pneumatikzylinder.

Je nach Bedarf gestattet der Magnetantrieb auch die Realisierung anderer Kombinationen von einzelnen oder mehreren drei/zwei Wegeventilen mit oder ohne Stellungsanzeige des Ventilgliedes oder Notbetätigung von Hand. Dies ist klar, wenn man das Applikationsbeispiel nach Figur 8 betrachtet im Vergleich zu Figur 2e. Es ist im Prinzip möglich, um jede einen Hubanker aufnehmende Ringpolbohrung Rp eine Ventilkammer aufzubauen. Der Hubanker 3, 4 bekommt eine Führungshülse 7 und Ventilkegel 14 und wird so zum Schließglied. Dieses kann Strömungswege sperren, die in die Außenpole 5 praktiziert sind.

Falls solche Anordnungen funktionelle Vorteile bieten, kann man also eins, zwei oder mehrere drei/zwei Wegeventile auf der einen oder beiden Seiten der Wicklung anbringen, vgl. Figur 2e.

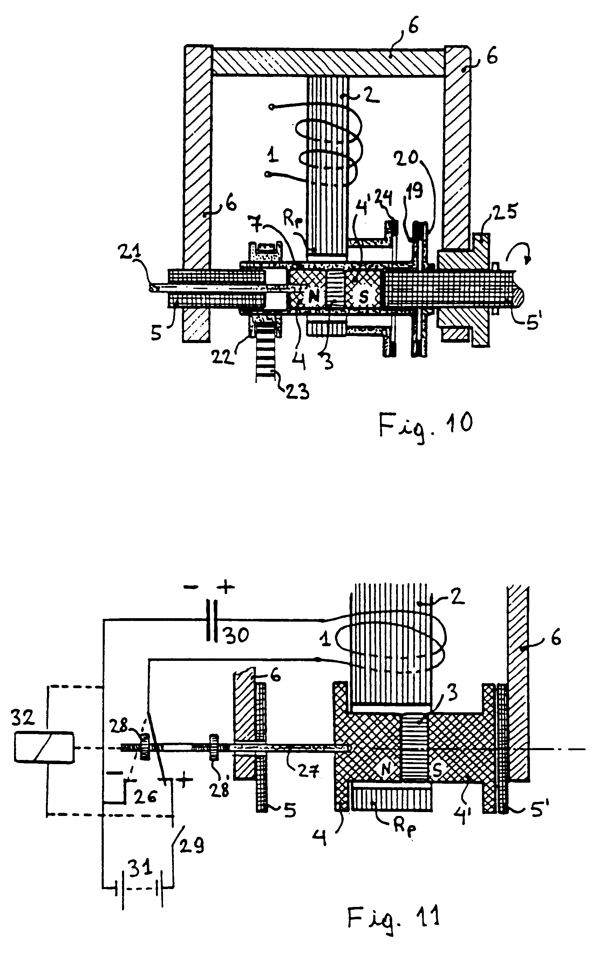

Figur 9 zeigt ein Applikationsbeispiel der Erfindung als Schieberventil, das sich durch eine extrem geringe Ventilschiebermasse auszeichnet. Der Hubanker 3, 4 dient als Ventilschieber, woei eine sich über die Polstücke 4, 4' erstreckende, nicht magnetische Hülse 7 die Teile 3 und 4 zusammenhält und entsprechend bearbeitet als Teil des Ventilschiebers dient. Wie bei üblichen Schieberventilen kann der Ventilschieber 3, 4, 7 Druckleitungen P mit Arbeitsleitungen A, B verbinden oder diese letzteren mit Entleerungsleitungen R, S verbinden. Diese Leitungen sind hier in einem Befestigungskörper-Ventilblock 10 eingearbeitet. Er besteht z. B. aus nichtmagnetischem Stahl und nimmt die Ringpolzone Rp des Magnetkerns 2 auf, die beispielsweise durch Hartlöten eingelassen ist. Der Ventilblock 10 samt Ringpol kann dann mit der notwendigen Präzision innen und außen bearbeitet werden. Die waagerechte Bohrung, in die der Ventilschieber 3, 4, 7 frei mit geringstmöglichem Spiel gleiten kann, wird seitlich von den Außenpolen 5, 5' geschlossen, die entsprechend der Frontseite der Polstücke 4, 4' kegelförmig ausgebildet sind, um dem Magnetantrieb eine Kennlinie mit möglichst konstanter Kraft zu verleihen. Wenn an der Leitung P eine (Öl-) Druckquelle und an den Arbeitsleitungen A und B ein Arbeitszylinder angeschlossen werden, kann, wie unter Figur 8 beschrieben, mit Hilfe dieses Ventils die Bewegung des Kolbens gesteuert werden. Die Bewegung des Ventilschiebers 3, 4, 7 nach rechts führt dazu, daß die Verbindungen zwischen den Leitungen B und A bzw. B und S unterbrochen werden. Dabei werden die Strömungsverbindungen P-B und A-R hergestellt. Sollten z. B. für Hochdruckhydraulik höhere Kräfte am Ventilschieber nötig sein, so kann ein größerer Magnetantrieb außerhalb des Magnetankers liegende, im Durchmesser kleinere Ventilschieber bewegen. Diese könnten z. B. innerhalb der entsprechend gestalteten Außenpole 5 arbeiten.

Figur 10 zeigt ein Applikationsbeispiel der Erfindung als Kupplungs-Bremseinheit, wobei die koaxialen Teile, wie Außenpole 5 und Hubanker 3, 4 zu einem drehbaren Antriebsstrang gehören. Der Hubanker 3, 4 ist in einer gegenüber den Außenpolen 5 drehbaren Hülse 7 eingefaßt, die sich über diese mit zylindrischen Fortsätzen erstreckt, welche als Lagerungen dienen. Auf der rechten Seite trägt die Hülse 7 eine Reibscheibe 19 mit möglichst geringem Massenträgheitsmoment. Diese Scheibe kann, wie gezeichnet, von einer Kupplungsscheibe 20 angetrieben werden, die mit dem als Drehwelle wirkenden Außenpol 5' solidarisch rotiert. Die Bewegung der Antriebswelle 5' wird also in der gezeichneten Stellung des Hubankers 3, 4 über die Scheiben 20 und 19 auf die Hülse 7 bzw. auf den Hubanker 3, 4 übertragen. Die Drehbewegung kann weiterhin axial von einer nichtmagnetischen Antriebswelle 21 übernommen werden, die im Polstück 4 verdrehfest einrastet. Die Drehbewegung kann alternativ z. B. über eine an der Hülse 7 befestigten Zahnriemenscheibe 22 mit Zahnriemen 23, statt der Antriebs-welle 21 übertragen werden. Wenn eine Bremsung der Antriebswelle beabsichtigt ist, so wird der Hubanker 3, 4 samt Hülse 7, Antriebselemente 21, 22 und Reibscheibe 19 nach links bewegt, bis diese letzte in Kontakt mit der Bremsscheibe 23 zum Stillstand kommt. Die Magnetfeldlinien vom Rückschlußjoch 6 werden im Außenpol -Drehwelle 5' z. B. über die Lagerschale 25 eingeleitet, die in einem solchen Fall aus weichmagnetischem, porösen Sinterstahl besteht.

Auf Grund der zu beiden Endstellungen ansteigenden Magnetkraft und hoher Haltekräfte eignet sich der Antrieb besonders gut für den Einsatz bei Relais und Schützen, wo höhere Kontaktandruckkräfte erwünscht sind. Die Kennlinie des Magnetantriebes (Fig. 1d) ist der der Betätigungskräfte eines Umschaltkontaktes sehr ähnlich. Ein kompaktes Schaltgerät entsteht durch Anbringen von Kontakten oder Kontaktblöcken in der Nähe des Hubankers 3, 4 eines Antriebes wie in Fig. 3a oder Fig. 3d.

Die Kontakte bzw. Kontaktlamellen können direkt von der Hubankerhülse 7 betätigt werden, die zweckmäßigerweise aus Kunststoff hergestellt ist und seitliche Antriebsfortsätze wie der Betätigungskamm eines Kammrelais hat.

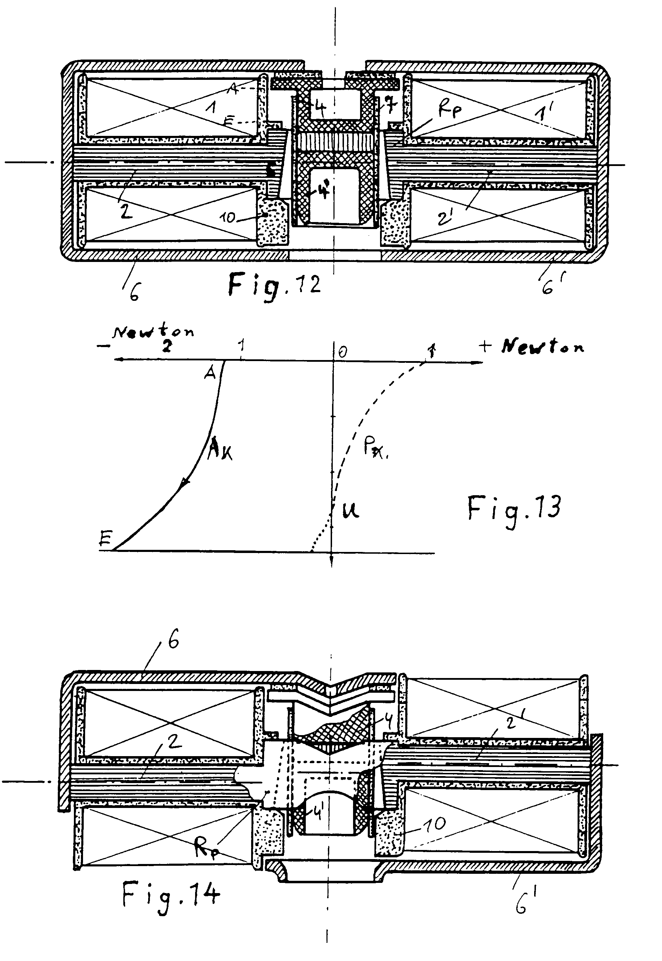

Der Magnetantrieb kann auch als Schwingmagnet eingesetzt werden, wobei der Hubanker 3, 4 nur kurzzeitig die Anschlagstellungen erreicht, d. h. er kommt in Kontakt oder in die Nähe der Außenpole 5. Eine Schwingantriebs-funktion kann bei der Versorgung der Wicklung mit Wechselstrom oder mit rechteckigen, trapez- oder sägezahnförmigen Impulsen wechselseitiger Polarität erreicht werden. Die Auslösung solcher Impulse läßt sich zweckmäßig in Abhängigkeit von der Stellung des Hubankers 3, 4 steuern. Dies geschieht am einfachsten über Endlagerkontakte, wie z. B. in Fig. 11 in Verbindung mit einer Kondensatorimpulsschaltung dargestellt. Der bewegliche Wechselkontakt des bistabilen Schalters 26 ist mit dem Anfang der Wicklung 1 verbunden und kann von der Betätigungsstange 27 vom seitlichen Pluskontakt (rechts) auf den Minuskontakt (nach links) umgeschaltet werden. Auf der mit Gewinde versehenen Betätigungsstange 27 bfinden sich zwei Einstellmuttern 28, mit deren Hilfe die Schaltpunkte des Schalters 26 genau justiert werden können. Bewegt sich der Hubanker 3, 4 nach links, so verschiebt dieser die mit dem Polstück 4 solidarische Betätigungsstange 27 des Umschalters nach links. Die rechte Einstellmutter 28' bewegt die Umschaltlamelle des Umschalters 26 nach links (von + nach -) erst wenn die linke Anschlagstellung des Hubankers 3, 4 am Außenpol 5 beinahe erreicht ist. Die Umschaltung in die Ursprungsstellung (von - nach +) geschieht kurz vor Erreichen der rechten Stellung des Hubankers 3, 4 am Anschlagpol 5' mit Hilfe der Einstellmutter 28.

### Funktionsweise:

Der Hubanker 3, 4 samt Umschalter 26 befindet sich in der gezeichneten Stellung rechts. Wenn der Steuerschalter 29 geschlossen wird, gerät die Wicklung 1 unter Strom, der die Fließrichtung vom Umschaltkontakt 26 zum Kondensator 30 hat. Dieser Strom bewirkt die Bewegung des Hubankers 3, 4 nach links und lädt gleichzeitig den Kondensator 30. Der Stromimpuls endet, wenn der Hubanker 26 auf die linke Stellung (-) springt. Zu diesem Zeitpunkt ist der Kondensator 30 geladen oder nahezu geladen, so daß die Öffnung des rechten Kontaktes (am +) fast stromlos erfolgt. Die Schließung des linken (-) Kontaktes bewirkt jetzt, daß der Strom vom Plus des Kondensators 30 zum Umschaltkontakt fließt, also in umgekehrter Richtung. Der Kondensator entlädt sich und der Hubanker 3, 4 kehrt zur Ausgangsstellung zurück. Kurz vor Erreichen des rechten Außenpols 5' schaltet der Umschalter 26 wieder auf den Pluskontakt und der beschriebene Bewegungszyklus wiederholt sich; es stellt sich also ein Schwingbetrieb des Hubankers ein. Der Stromverbrauch bei dieser Betriebsart ist besonders gering, weil die Energie in nur einer Bewegungsrichtung aus der Batterie 31 entnommen wird. Die Lebensdauer der Kontakte ist hoch, weil deren Öffnung nahezu stromlos (mit geringer Funkenbildung) erfolgt. Statt einer Kombination Kondensator 30 plus Wicklung 1 kann bei diesem Magnetantrieb eine energiespeichernde, induktiv-kapazitive Wicklung, wie erwähnt, eingesetzt werden.

Wenn der Umschalter 26 von außen gesteuert ist, lassen sich mit Hilfe dieser Lade-Entladeschaltung auch einzelne Betätigungsvorgänge realisieren.

Eine Aufbereitung der Betätigungsimpulse mit anderen bekannten Mitteln (Kreuzschalter, Wicklung mit Mittenanzapfung usw.) ist jederzeit möglich, jedoch meistens komplizierter.

Statt des mechanischen Umschalters 26 (Fig. 11) können auch berührungslose Sensoren, wie Näherungsschalter, Hallsonden, Lichtschranken usw. eingesetzt werden, die eine elektronische Impulsaufbereitung steuern. Das Erreichen der Endstellungen des Hubankers 3, 4 an den Außenpolen 5, 5' läßt sich auch mit Hilfe einer oder mehrerer Zusatzwicklungen ermitteln und zur Steuerimpulsaufbereitung verarbeiten. Beim Erreichen einer Anschlagstellung erfolgt im Magnetkreis (Magnetkern 2, Rückschlußjoch 6 und Außenpole 5) eine starke Magnetfeldänderung, die in einer Wicklung, die einen dieser Teile umringt, einen charakteristischen Spannungsanstieg hoher Steilheit verursacht, der zur Auslösung der Umschaltimpulse herangezogen werden kann.

Die aufgeführten Ausführungsbeispiele dienen lediglich dazu, konkrete Hinweise für mögliche konstruktive Gestaltungen zu geben. Der Fachmann kann sich z. B. entscheiden, anstelle der Ausführungen mit Kolben Membran- oder Kolbenmembranpumpen zu bauen. Er kann zwischen die Polstücke 4 und die Außenpole 5 nichtmagnetische Abstandhalter vorsehen (z. B. elastische Platten für die Geräuschreduzierung).

Wie in Fig. 1d gezeigt, wo links, also am Außenpol 5, eine Luftspaltplatte mit der Stärke 1 als vorhanden angenommen wird, reduzieren solche Abstandhalter durch Hubbegrenzung sowohl den u. U. unnötig steilen Anstieg der Anzugskräfte AK-l als auch die Haltekraft HK-l. Falls gegen die Kraft AK-l z. B. eine Federkraft (FK, s. Kennlinie) wirkt, die die nun reduzierte Haltekraft HKₓ der Feder überwindet, so wird in stromlosem Zustand der Wicklung der Hubanker 3, 4 nach rechts zurückgedrängt. Das Verhalten des Magnetantriebes wird also auf mechanische Weise zum monostabilen modifiziert.

Das monostabile Verhalten ist of erwünscht, und es läßt sich unter Beibehaltung aller Vorteile des Antriebes über eine gezielte Steuerung einer Schaltung mit kapazitiver Energiespeicherung, wie in Fig. 11 erreichen. In diesem Fall sollte der Umschalter 26 monostabil sein und nicht mehr vom Hubanker betätigt werden, sondern extern durch Anlegen einer Spannung z. B. an die Relaiswicklung 32 (mit den Anschlüssen gestrichelt gezeichnet). Vor Anlegen der Spannung über den Schalter 29 befindet sich der Umschalter 26 in der linken Stellung (bei -). Beim Anlegen der Spannung wird die Relaiswicklung erregt, und der Umschalter 26 wechselt auf die rechte Seite (bei +). Die Wicklung 1 wird unter Strom gesetzt und der Hubanker 3, 4 bewegt sich nach links, wobei der Kondensator 30 sich lädt und unter Spannung bleibt. Wird der Schalter 29 geöffnet, so fällt der Umschalter 26 in die Ursprungsstellung (nach links bei -) zurück und der Kondensator 30 entlädt sich in der Wicklung 1, was zur Folge hat, daß der Hubanker sich in die Ursprungsstellung (nach rechts) zurückbewegt.

Das Anlegen / Wegnehmen der Spannung mit Hilfe des Schalters 29 steuert den Antrieb in monostabiler Betriebsweise, wobei die Wicklung 1 kurz kurzzeitig, extrem energiesparend unter Strom steht. Ähnliche Schaltungen lassen sich auch, wie in der Relaistechnik bekannt, mit elektronischen Mitteln durchführen. Die Erfindung gestattet also, mit geringem mechanischen Aufwand die Realisierung einer breiten Palette von elektromechanischen Produkten, wobei wesentliche Vorteile, wie Energieeinsparung, geringes Hubankergewicht, Steuerbarkeit in zwei Richtungen, Änderung des Antriebsverhaltens durch gezielte Beschaltung, kleine Abmessungen usw. in den Vordergrund treten.

Die Erfindung betrifft ferner Sonderbauformen der Magnetantriebe, welche die oben beschrieenen Ausführungsbeispiele, insbesondere im Hinblick auf monostabile Betriebsweise erweitern. Dadurch soll der Magnetantrieb praktischen Einsatzfällen angepaßt werden unter Beibehaltung der Merkmale, die insbesondere den permamentmagnetischen Hubanker betreffen, der stets einen flachen Hochleistungsmagneten beinhaltet und innerhalb eines diesen Anker umfassenden Ringpols gleitet. Es ergibt sich die Möglichkeit, den seinem Wesen nach bistabilen Magnetantrieb durch gezielte Schaltungen monostabil zu machen.

Im nachfolgenden werden weitere Ausgestaltungen der Polbereiche aufgezeigt, die die Kennlinien des Magnetantriebes derart verändern, um den mechanisch monostabilen Betrieb zu gestatten. Außerdem wird beschrieben, wie sich der Magnetantrieb durch Unterteilung der Wicklung verschiedenen Einbauraumverhältnissen anpassen läßt, wobei die Energieeffizienz gesteigert wird.

Für gleiche oder gleichwirkende Bauteile sind die gleichen Bezugszeichen wie oben verwendet.

Der Magnetantrieb nach Fig. 12 hat zwei Wicklungen 1, 1' und entsprechend zwei Magnetkerne 2, 2' und zwei Außenjoche 6, 6' mit jeweils der Hälfte des magnetischen Querschnittes gegenüber der bei einer Wicklung notwendigen. Diese sind derart gewickelt, daß sie, falls stromdurchflossen, dem Ringpol Rp stets die gleiche Polarität z. B. Süd (S) einprägen. Dadurch wirken sie magnetisch wie eine Einzelwicklung, jedoch mit einer höheren Energieeffizienz (Ampère-Windungen/Watt) bei gleicher Raumausnutzung.

Bei gleichem Wicklungsquerschnitt bzw. -qualität in dem Raum, in dem eine Anzahl von n Windungen untergebracht werden können, die von einem Strom I durchflossen werden, gestattet die Aufteilung in zwei Wicklungsabschnitte, daß die dazu notwendige Spannung (Leistung) niedriger ist. Dies geschieht, weil die zwei Spulen, jeweils mit einer Länge L, auf denen je n/2 Windungen gewickelt sind, weniger Draht (geringerer Widerstand) aufweisen als eine Wicklung mit der gleichen Länge L und mit n Windungen, die eine größere mittlere Windungslänge haben. Der im Querschnitt auf zwei Hälften unterteilte Magnetkern 2 trägt auch zur Verkürzung der mittleren Windungslänge bei.

Der Hochleistungsmagnet 3 auf der Basis von seltenen Erden befindet sich zwischen den Polstücken 4, 4', die, soweit es die magnetischen Mindestquerschnitte zulassen, ausgehöhlt sind, um Ankergewicht zu sparen. Eine nicht magnetische Hülse 7 zentriert die Teile 3, 4 des Hubankers und kann als mechanische Führung dienen. Das Polstück 4 ist oberhalb des Ringpols Rp T-förmig ausgeweitet, was zu einer schwach ansteigenden Anzugskraftkennlinie Ak (Fig. 13) führt. Zum selben Zweck bzw. zur Änderung der Kennlinie im Hinblick auf eine monostabile Betriebsart dient die Ausgestaltung des Polstückes 4', das, an der unteren Seite abgerundet, in eine Bohrung eintauchen kann, die an der Unterseite des Außenjoches 6 praktiziert ist. Es kommt also in diesem Bereich zu keinem frontalen Anschlag zwischen den Polstücken 4' und 6, der bekanntlich zu einer hohen, hubabhängig steil ansteigenden Kraft führen würde.

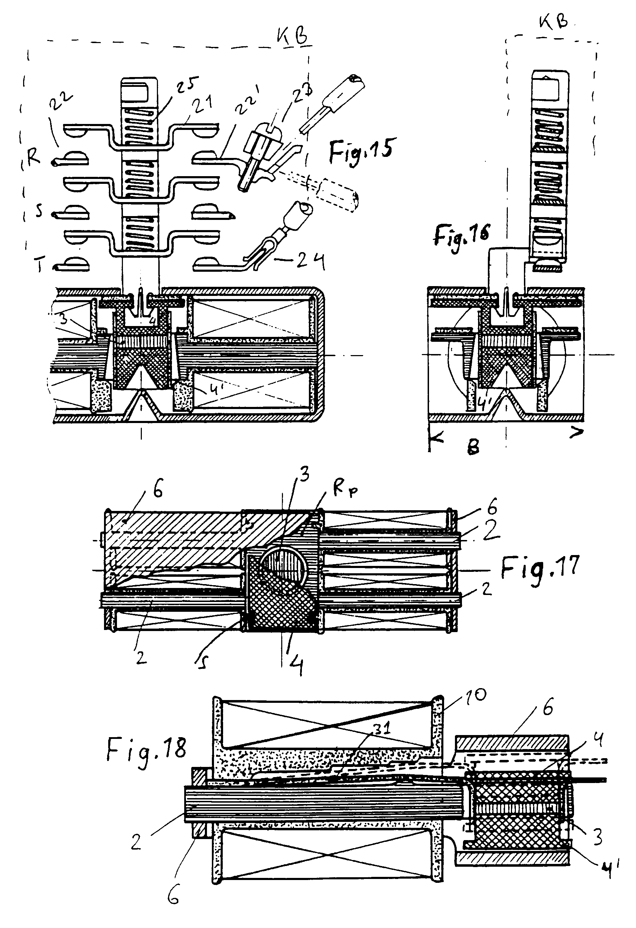

Je nach Bedarf zur Änderung der Anzugskraftkennlinie kann dieser Polbereich 4', 6, 6' auch anders gestaltet werden, wie z. B. mit einem zylindrischen oder kegeligen Fortsatz des Durchbruches im unteren Teil des Außenjoches 6, wie z. B. in Fig. 15, 15 und 16 abgebildet. Fig. 13 zeigt den grundsätzlichen Verlauf der elektromagnetischen Anzugskraft Ak für eine vorgegebene Stromfließrichtung bzw. der permanentmagnetischen Haltekraft Pk für einen Magnetantrieb nach Fig. 12. Die senkrechte Achse entspricht richtungskonform dem Ankerhub (von der gezeichneten Stellung nach unten). Auf der linken Seite sind die nach unten gerichteten Kräfte eingetragen (-) und auf der rechten Seite die nach oben gerichteten (+), welche die Wiederkehr des Ankers bewirken. Beim mechanisch monostabilen Betrieb des Magnetantriebes soll der Hubanker allein auf Grund der permanentmagnetischen Kräfte zurückkehren. Bei der Erregung der Wicklung erreicht die elektromagnetische Anzugskraft den Wert A, die, höher gewählt als die Kraft der anzutreibenden Vorrichtung, dazu führt, daß sich der Hubanker 3, 4, 4' nach unten bewegt, wobei die Kraft gemäß der Kennlinie Ak zunimmt bis die untere Ankerstellung E erreicht wird. Wenn auf den Hubanker keine äußeren Kräfte wirken, bleibt er nach Stromunterbrechung gemäß der Kennlinie Pk in dieser Stellung haften, weil in diesem Hubbereich die permanentmagnetische Kraft Pk (Punktlinie) negativ ist. Der Magnetantrieb alleine genommen ist in diesem Fall bistabil. Falls der Hubanker mit Hilfe einer äußeren nach oben gerichteten (+) Kraft (Hilfsfeder, Rückwirkung der angetriebenen Vorrichtung) entgegen dem negativen Anteil der Kräfte Pk nach oben bewegt wird, über den Umkehrpunkt U hinaus, dann wird ab hier die Bewegung nach oben vom positiven Anteil der Kraft Pk unterstützt. Mit einer geringen Rückkehrhilfe (Überwindung des negativen Antils der Kräfte Pk) wirkt also der Magnetantrieb monostabil.

Durch konstruktive Maßnahmen ist es möglich, den Umkehrpunkt U so weit nach unten zu verlegen, daß der Magnetantrieb alleine monostabil ist, d. h. die permanentmagnetischen Kräfte haben auf dem vorgegebenen Hub nur positive Vorzeichen. Der monostabile Betrieb ließe sich erreichen durch Vergrößerung bzw. Formveränderung des Luftspaltes zwischen dem Polstück 4 und dem Ringpol Rp oder durch die Gestaltung der unteren Polteile 4', 6 oder durch eine kegelförmige, sich nach unten öffnende Gestaltung des Ringpols Rp, insbesondere an dessen unteren Seite oder durch Einschnitte in den Ringpol, wie Z. B. in Fig. 14 gezeigt. Unter Berücksichtigung magnetisch relevanter Gegebenheiten können alle weichmagnetischen Teile 2, Rp, 4, 6 konstruktiv beliebig unterteilt und zusammengesetzt werden.

Es ist fertigungstechnisch sinnvoll, die Magnetkerne 2 samt Ringpol Rp mit einem isolierenden Stoff, wie Thermoplast, Epoxydharz usw. zu umspritzen und auf diesem Weg auch die Wickelkörper bzw. die mechanische Führung für den Hubanker in einem Fertigungsschritt herzustellen.

Der durch Umspritzung gebildete Kunststoffkörper 10 ist also gleichzeitig Wickelkörper für die beiden Wicklungsabschnitte 1, 1' und kann auch die elektrischen Anschlüsse angeformt haben, mechanische Führung für den Hubanker, der z. B. mit der oberen bzw. unteren Seite gegenüber dem Kunststoffkörper 10 gleitet, als auch Abstandhalter (Luftspalt) zwischen der oberen Seite des Polstückes 4 bzw. dem Ringpol Rp.

Fig. 14 zeigt schematisch einen Magnetantrieb, der gegenüber dem in Fig. 12 dargestellten an der Seite jeder Wicklung ein Außenjoch 6 mit nur einem Schenkel hat. Dieses Joch 6 erstreckt sich über dem Polbereich des Hubankers 3, 4, so daß das Joch 6 der linken Wicklung als oberer Außenpol dient, bzw. der der rechten 6' als unterer Außenpol. Damit sind die Magnetkreise der linken bzw. rechten Wicklung voneinander unabhängig. Dies hat den Vorteil, daß eine angestrebte, nicht symmetrische Stromverteilung zwischen den zwei Wicklungsteilen zur Verbesserung der dynamischen Eigenschaften des Antriebes eingesetzt werden kann.

Wenn die zwei Wicklungen z. B. in Reihe geschaltet sind, wobei parallel zur rechten Wicklung ein Kondensator angeschlossen ist, wird eine an den Wicklungen angelegte Spannung dazu führen, daß der Strom in der linken Wicklungshälfte nach der Einschaltung kurzzeitig einen höheren Wert erreicht, was der Haftungsneigung des oberen Polstückes 4 am Hochteil 6 entgegenwirkt und so die Bewegungseinleitung erleichtert.

Eine ähnliche, meist weniger ausgeprägte kurzzeitige Magnetfeldverlagerung in der Luftspalte oberhalb bzw. unterhalb des Ringpols Rp kann man auch mit an geeigneten Stellen angebrachten Kurzschlußwindungen, z. B. auf dem Rückschlußjoch 6, erreichen und dies auch bei anderen Magnetkreisen, wie nach Fig. 12.

Zum Zwecke der Beeinflussung der Kennlinien können Magnetkreise wie in Fig. 14 auch unterschiedliche Wicklungsparameter der Teilwicklungen haben, die dazu führen, daß die Ampére-Windungszahlen für die beiden Teile des Magnetantriebes stets unterschiedlich sind.

Fig. 14 zeigt außerdem eine andere Gestaltung der ankernahen Polbereiche. Der Ringpol Rp (hier nicht geschnitten dargestellt) hat keine konstante Höhe, sondern weist stets symmetrisch verlaufende Höheneinschnitte auf, und zwar oben V-förmig, unten kreissegmentförmig abgebildet. Damit wird bezweckt, daß das Überfahren (während des Ankerhubes) einer Kante des Ringpols Rp vom Kantenumfang des Permanentmagneten 3 nicht gleichzeitig über den ganzen Ringpolumfang geschieht. Dies hätte u. U. zur Folge, daß in der Anzugskraftkennlinie des Antriebes eine Unregelmäßigkeit (Rastpunkt) eintritt. Da der Umfang der Ringpolkante als Folge der beschriebenen Gestaltung nicht mehr eine Ebene ist, kann man solche Rastpunkte vermeiden bzw. glätten. Dieser Gestaltung des Ringpols Rp entspricht auch die Form des Polstückes 4, dessen Breitseite V-förmig, wie auch die darüberliegende Verlängerung des Außenjoches 6, ausgebildet ist. Diese Maßnahmen können auch für die anderen Applikationsbeispiele der Hauptanmeldung nach eingesetzt werden.

Auf Grund der Existenz mehrerer Arbeitsluftspalten hat der Fachmann also die Möglichkeit, durch Einzelgestaltung dieser die Anzugskraftkennlinie sowohl im Hubanfangsbereich als auch im mittleren bzw. Hubendbereich zu beeinflussen, und zwar in weiteren Grenzen als bei bisherigen Magnetantrieben.

Durch die mittige Hubankerstellung eignen sich die Magnetantriebe der Fig. 12 und 14 besonders gut für Schütze und gestatten, daß Schütze mit schmalerer Bauform für höhere Packungsdichte an einer Befestigungsschiene entstehen. Fig. 15 und 16 zeigen eine vorteilhafte räumliche Anordnung eines schmalen Schützes mit Magnetantrieb nach Fig. 12, welcher hier im unteren Polbereich ein hohlkegeliges Polstück 4' hat. Der Hubanker 3, 4 treibt direkt, entlang der vertikalen Symmetrieachse die beweglichen Kontakte 21 an, die zu einem Kontaktblock KB gehören. An den feststehenden Kontakten 22, 22' sind z. B. Drehstromadern R, S, T durch Schraubklemmen 23 oder Steckklemmen 24 angeschlossen. Fig. 16 zeigt einen Querschnitt durch dieses Schütz. Im Falle eines Minischützes im meistverwendeten Schaltleistungsbereich bis etwa 6KW beträgt die Antriebsbreite B etwa 25mm. Die senkrechte Anordnung der Kontakte mit einer Breite von etwa 12 mm per Kontaktblock gestattete es, neben dem versetzt anzuordnenden Hauptkontaktblock einen Nebenkontaktblock oder andere Hilfseinrichtungen unterzubringen. Die Andruckfedern 25 der beweglichen Kontakte 21 können bewirken, falls der Magnetantrieb eine Kennlinie der permanent-magnetischen Kräfte wie in Fig. 13 hat, daß das Verhalten des Schützes monostabil ist. In stromlosem Zustand der Spule hilft die Reaktion der Federn 25 zum Abheben des Hubankers 3, 4 also zur Überwindung des negativen Anteils der permanentmagnetischen Kräfte Pk.

Fig. 17 zeigt eine Draufsicht mit Teilschnitten auf einen Magnetantrieb ähnlich dem in Fig. 12 und 14, der statt zwei jetzt vier in der gleichen Richtung orientierte Wicklungen hat, deren Kerne (mit stets gleicher Polarität) nach außen am Außenjoch 6 und nach innen am Ringpol Rp angeschlossen sind. Der Umfang des Ringpols sowie ein oder beide Polstücke 4 sind viereckig und meist ähnlicher Größe. An dem Ringpol Rp sind vier Wickelkerne 2 angeformt oder angebracht, die die Wicklungen 1 tragen. Der Hubanker mit dem Permanentmagneten 3 und die Polstücke 4 sind senkrecht zur Zeichenebene zwischen dem Ringpol Rp und dem Außenjoch 6 bewegbar. Er wirkt magnetisch mit diesen Teilen zusammen, die eine der bisher beschriebenen Ausgestaltungen haben können.

Der Ringpol Rp kann auch hier mit Kunststoff umspritzt werden, um eine mechanische Führung für den Hubanker zu bilden. Aus dieser Umspritzung können Stege S gebildet werden, die parallel zur Hubankerachse verlaufen und dem flachen Teil des Polstücks 4 als Führung dienen.

Die vier oder mehrere Wicklungen können z. B. auch kreuz- oder sternförmig angeordnet werden, wobei der Umfang des Ringpols Rp quadratisch wäre. Dies ergäbe eine symmetrischere Verteilung des Magnetflusses sowie die Möglichkeit, die vier Wicklungen direkt auf dem kreuzförmigen Kern mit Ringpol nacheinander zu wickeln, führte jedoch zu größeren Abmessungen des Antriebes. Je nachdem, wie die räumlichen Verhältnisse bzw. der Hub des Antriebes es fordern, können zwei oder mehrere Wicklungen mit der Achse senkrecht zur Ebene des Ringpols Rp, d. h. parallel zur Hubrichtung angebracht werden. Das Vorhandensein mehrerer Wicklungen gestattet es, daß diese nach Bedarf in Reihe oder parallel geschaltet werden und auf diese Weise einem Magnetantrieb die Funktion mit verschiedenen Spannungen gestatten.

Fig. 18 zeigt einen Magnetantrieb, insbesondere für Relais, dessen Hubanker mit Hilfe einer Lamellenfeder geführt ist. Die Lamellenfeder 31 aus nichtmagnetischem Federwerkstoff ist entlang dem Magnetkern 2 durch den Befestigungskörper 10 (gleichzeitig Wickelkörper) geführt und kann sich an einem dieser Teile derart stützen, daß sich sein elastisch wirksame Länge je nach der Stellung des Hubankers 3, 4 ändert. Dieses Merkmal kann gezielt dazu eingesetzt werden, um die Antriebskennlinie an die Erfordernisse einer anzutreibenden Vorrichtung anzupassen, z. B. um durch Kraftspeicherung ein monostabiles Verhalten zu bewirken. Der Befestigungskörper 10, der gleichzeitig Spulenkörper ist, ist vom Magnetkern 2 durchdrungen, der einen Ringpol Rp hat. Die Lamelle 31, die ungleiche Breite haben kann, ist an ihrem linken Ende, z. B. zusammen mit dem Magnetkern 2, dem Befestigungskörper 10 bzw. mit dem Außenjoch 6 befestigt.

## Patentansprüche

1. Magnetantrieb mit mindestens einem, in Bewegungsrichtung magnetisierten, aus einem Permanentmagneten (3) mit zwei weichmagnetischen Polstücken (4, 4') bestehenden Hubanker (3, 4), der entlang einer gemeinsamen Achse zwischen zwei elektromagnetischen, stets mit gleicher Polarität magnetisierbaren Außenpolen (5, 5') bewegbar ist und dabei axial innerhalb eines Durchbruches eines dritten, zwischen den Außenpolen (5, 5') befindlichen und diesen gegenüber stets mit gegensätzlicher magnetischer Polarität ansteuerbaren Elektromagnetpoles angeordnet ist, wobei dieser Elektromagnetpol aus einem weichmagnetischem Magnetkern (2) und einem den Durchbruch aufweisenden Ringpol (Rp) besteht und wobei der Ringpol (Rp) aus einer auf dem Magnetkern (2) gewickelten Wicklung (1) herausragt , dadurch gekennzeichnet, daß der Permanentmagnet (3) des Hubankers (3, 4) aus einem Material hergestellt ist, das eine minimale Remanenzinduktion Br von 0,7 T hat, bei einem Energieprodukt BHmax, das mindestens 100 kJ/m³ erreicht, daß der Permanentmagnet (3) scheibenförmig ausgebildet ist und daß seine Höhe, in Bewegungsrichtung gesehen, höchstens so groß gewählt ist, wie die Hälfte seines Durchmessers.

2. Magnetantrieb nach Anspruch 1, dadurch gekennzeichnet, daß je nach Zweck des Antriebes die weichmagnetischen Polstücke (4, 4') des Hubankers (3, 4) gleiche oder unterschiedliche Abmessungen haben und daß die Form dieser Polstücke (4) auf den den Außenpolen (5) zugewandten Frontseiten der Form dieser Außenpole (5) angepaßt ist, wobei die Form dieser gleichen Polstücke (4, 4') auf der dem Ringpol (Rp) zugewandten Seite der Form des gegenüberliegenden Umfanges des Durchbruches im Ringpol (Rp) entspricht, so daß die Reluktanz der magnetischen Strecken zwischen den permanentmagnetischen Polen (4) und den elektromagnetischen Außenpolen (5) bzw. des Ringpoles (Rp) möglichst niedrig ist und durch die Formgebung der magnetischen Pole (4, 5) und des Ringpoles (Rp) ein direkter magnetischer Schluß zwischen den Außenpolen (5) und dem Ringpol (Rp) möglichst unterbunden wird.

3. Magnetantrieb nach den Ansprüchen 1 und 2, dadurch gekennzeichnet, daß mindestens eines der Polstücke (4, 4') sich radial über den Umfang des Permanentmagneten (3) hinaus in den Raum zwischen den Außenpolen (5) und dem Ringpol (Rp) erstreckt.

4. Magnetantrieb nach einem der Ansprüche 1 bis 3, dadurch gekennzeichnet, daß die Form der Polstücke (4, 4') entsprechend der Form der Außenpole (5, 5') bzw. des Ringpols (Rp) kegelförmig ist.

5. Magnetantrieb nach einem der Ansprüche 1 bis 4, dadurch gekennzeichnet, daß der Permanentmagnet (3) und / oder die Polstücke (4, 4') in einer dünnen, nicht magnetischen Hülse (7) eingefaßt sind.

6. Magnetantrieb nach Anspruch 5, dadurch gekennzeichnet, daß die Hülse (7) sich über zylindrische Fortsätze der Außenpole (5, 5') erstreckt und daß sie gegenüber diesen oder gegenüber dem Ringpol (Rp) die Rolle einer mechanischen Führung und Lagerung übernimmt.

7. Magnetantrieb nach Anspruch 6, dadurch gekennzeichnet, daß die nichtmagnetische Hülse (7) gleichzeitig als funktioneller Teil einer vom Magnetantrieb angetriebenen Arbeitsvorrichtung dient.

8. Magnetantrieb mit mindestens einer angetriebenen Arbeitsvorrichtung nach den Ansprüchen 1 bis 7, dadurch gekennzeichnet, daß die Arbeitsvorrichtung in unmittelbarer Nähe des Polbereiches (4, 5) und des Ringpols (Rp) untergebracht ist, so daß eine funktionelle Einheit gebildet ist.

9. Magnetantrieb nach den Ansprüchen 1 bis 8, dadurch gekennzeichnet, daß er mindestens zwei Hubanker (3, 4) hat, die innerhalb entsprechender ringpolartiger Durchbrüche (Rp), die sich auf einer oder beiden Seiten des Magnetkerns (2) befinden, bewegbar angeordnet sind und sich zwischen in Bewegungsrichtung angebrachten Außenpolen (5) mit Hilfe einer einzigen Wicklung (1) und / oder durch äußeren Krafteinfluß bewegt werden können.

10. Magnetantrieb nach Anspruch 9, dadurch gekennzeichnet, daß einer der Hubanker (3, 4) zur Stellungsanzeige und / oder Handbetätigung der übrigen Hubanker dient.

11. Magnetantrieb nach einem der Ansprüche 1 bis 10, dadurch gekennzeichnet, daß zur gegenseitigen mechanischen Positionierung der magnetisch relevanten Stücke, wie Außenpole (5), Magnetkern (2), Rückschlußjoch (6) sowie zur Positionierung übriger zur Arbeitsvorrichtung gehörender Teile ein am Ringpol (Rp) befestigter, nicht magnetischer Körper von einer dem Antriebszweck angepaßten Gestaltung angebracht ist, der auf mechanisch kurzem Wege eine kraftschlüssige Verbindung zwischen diesen Teilen im nahen Magnetpolbereich realisiert.

12. Magnetantrieb nach einem der Ansprüche 1 bis 11, dadurch gekennzeichnet, daß eine oder mehrere nichtbewegliche magnetische Teile (Rp, 2, 6, 5) aus gestapelten weichmagnetischen Blechen gefertigt sind.

13. Magnetantrieb nach einem der Ansprüche 1 bis 12, dadurch gekennzeichnet, daß die Hin- und Herbewegung des Hubankers (3, 4) durch elektrische Impulse wechselseitiger Polarität ausreichender Dauer und Stromstärke gesteuert ist.

14. Magnetantrieb nach Anspruch 13, dadurch gekennzeichnet, daß die Betätigungsimpulse durch die Aufladung bzw. Entladung einer Kapazität entstehen, die als Kondensator (30) in Reihe mit der Wicklung (1) geschaltet ist oder sich innerhalb der Wicklung (1) befindet, wenn diese als induktiv-kapazitive Wicklung gebildet ist.

15. Magnetantrieb nach den Ansprüchen 13 und 14, dadurch gekennzeichnet, daß die Auslösung der Betätigungsimpulse über die Hublage des Hubankers (3, 4) gesteuert ist und über mechanische Schalter (26) berührungsfreie Abstandssensoren oder Auswertung der Magnetfeldänderung im Magnetkreis (Rp, 2, 6, 5) ermittelt wird.

16. Magnetantrieb nach Anspruch 14 mit einer elektromechanischen (26, 32) oder elektronischen Steuerung, dadurch gekennzeichnet, daß beim Anlegen einer Versorgungsspanung diese die Aufladung der impulsbildenden Kapazität bzw. die Bewegung des Hubankers bewirkt und daß beim Abschalten dieser Spannung die Entladung der kapazitiven Ladung in der Wicklung des Antriebs eingeleitet wird, so daß die Rückkehr des Hubankers (3, 4) in die Ursprungsstellung hervorgerufen wird.

17. Magnetantrieb nach einem der Ansprüche 1 bis 16, dadurch gekennzeichnet, daß im polnahen Raum zwischen Außenpolen (5, 5') und / oder dem Ringpol (Rp) einerseits und dem Hubanker (3, 4) mit oder ohne Führungshülse (7) andererseits Federn zur Hubarbeitsspeicherung untergebracht sind.

18. Magnetantrieb nach einem der Ansprüche 1 bis 17, dadurch gekennzeichnet, daß zwischen den Polstücken (4, 4') und den Außenpolen (5, 5') oder dem Ringpol (Rp) nichtmagnetische Anschlagstücke vorgesehen sind.

19. Magnetantrieb für eine Verdrängerpumpe nach einem der Ansprüche 1 bis 18, dadurch gekennzeichnet, daß zwischen Außenpol (5) und Ringpol (Rp) ein als Kompressionszylinder ausgebildeter Befestigungskörper (10) vorgesehen ist, in dem der Hubanker (3, 4) mit Hilfe eines am Polstück (4) angebrachten Dichtungselementes (8) als Verdrängerkolben wirkt und daß das andere Polstück (4) eine Feder (13) zur Hubarbeitsspeicherung aufnimmt.

20. Magnetantrieb für eine doppelt wirkende Verdrängerpumpe nach einem der Ansprüche 1 bis 18, dadurch gekennzeichnet, daß zwischen den Außenpolen und dem Ringpol (Rp) zwei aus dem Befestigungskörper (10) ausgebildete Zylinder vorgesehen sind, in denen die mit Dichtungselementen (11) versehenen Polstücke (4, 4') des Hubankers (3, 4) als Verdrängerkolben wirken.

21. Magnetantrieb nach einem der Ansprüche 19 oder 20, dadurch gekennzeichnet, daß anstelle von Kolbendichtungselementen Verdrängerbausteine, wie Membrane oder Bälge, eingesetzt sind.

22. Magnetantrieb für Sitzventile nach einem der Ansprüche 1 bis 18, dadurch gekennzeichnet, daß mindestens eine Ventilkammer (15) vorgesehen ist, die um einen Ringpol (Rp) zwischen den Außenpolen (5, 5') gegenüber der Umgebung dicht aufgebaut ist, und daß in diese Ventilkammer verschiedene Druckanschlüsse münden, wobei die in den Außenpolen (5, 5') praktizierten Anschlüsse mit Hilfe von Ventilelementen (14) absperrbar sind und wobei diese Ventilelemente (14) in den Polstücken (4, 4') des als Ventilglied dienenden Hubankers (3, 4) praktiziert sind, wobei die Hubanker (3, 4) in einer über Fortsätze der Außenpole (5) gleitenden nichtmagnetischen Führungshülse eingefaßt ist, Hülse, die mit Strömungsöffnungen (o) versehen ist, die eine ungehinderte Strömung zwischen der Ventilkammer (15) und den vom Ventilglied (3, 4, 7, 14) absperrbaren nach außen führenden Anschlüssen (P, R, S) gestatten, wobei die Wände der Ventilkammer (15) durch die Ausformung des Befestigungskörpers (10) entstehen.

23. Magnetantrieb nach einem der Ansprüche 1 bis 18 für Schieberventile, dadurch gekennzeichnet, daß ein nichtmagnetischer Befestigungskörper (10) vorhanden ist, der den Ringpol (Rp) aufnimmt und wie ein Ventilblock mit Strömungsleitungen (P, A, B, R, S) ausgebildet ist, wo sich mindestens ein als Ventilschieber dienender Hubanker (3, 4, 7) bewegt, in dessen Polstücken (4, 4') Aussparungen für die Strömungssteuerung eingearbeitet sind.

24. Magnetantrieb nach einem der Ansprüche 1 bis 18 für Schieberventile, dadurch gekennzeichnet, daß der Hubanker (3, 4) mindestens einen Ventilschieber antreibt, der in einem mit Strömungsleitungen versehenen Ventilblock wirkt, der in einen Außenpol (5) eingearbei- tet ist.

25. Magnetantrieb für mechanische Kupplungen und / oder Bremsen nach einem der Ansprüche 1 bis 18, dadurch gekennzeichnet, daß der Hubanker (3, 4, 7) und mindestens ein Außenpol (5) rotierende Teile eines Antriebsstranges sind, die zusammenschaltbare, drehmomentübertragende Scheiben (19, 20) haben, wobei die Scheibe (19) solidarisch mit der Hülse (7) des Hubankers (3, 4) axial verschiebbar ist, so daß sie in schlupffreien Kontakt mit der rotierenden Scheibe (20) oder mit einer feststehenden Bremsscheibe (24) gebracht werden kann, und daß am Hubanker (3, 4, 7) Elemente zur Übertragung der Drehbewegung (21, 22) befestigt sind.

26. Magnetantrieb für elektrische Schaltapparate nach einem der Ansprüche 1 bis 18, dadurch gekennzeichnet, daß die Hülse (7) des Hubankers (3, 4) Fortsätze zum Antrieb von beweglichen Kontakten aufweist.

27. Magnetantrieb nach einem der Ansprücke 1 bis 18 und 26, dadurch gekennzeichnet, daß der Befestigungskörper (10) als Aufnahmekörper für elektrische Kontakte oder Kontaktblöcke dient.

28. Magnetantrieb nach Anspruch 1, dadurch gekennzeichnet, daß der Hubanker (3, 4) derart geführt ist, daß die Hubankerbewegung quer zur Achse der Wicklung (1) erfolgt.

29. Magnetantrieb nach einem der Ansprüche 1 bis 28, dadurch gekennzeichnet, daß aus dem Ringpol mehrere Magnetkerne (2) herausragen, die jeweils eine Wicklung (1) tragen, wobei die stets gleich polarisierbaren, aus den Wicklungen (1) dem Ringpol entgegengesetzt austretenden Extremitäten der Magnetkerne (2) am Außenjoch (6) angrenzen.

30. Magnetantrieb nach einem der Ansprüche 1 bis 29, dadurch gekennzeichnet, daß die Polstücke (4) unter Berücksichtigung magnetisch relevanter Mindestquerschnitte Hohlräume aufweisen.

31. Magnetantrieb nach einem der Ansprüche 1 bis 30, dadurch gekennzeichnet, daß die Außenpole (6) Durchbrüche aufweisen, die größer sind als der ihnen gegenüberwirkende Umfang der Polstücke (4).

32. Magnetantrieb nach einem der Ansprüche 1 bis 31, dadurch gekennzeichnet, daß der Querschnitt der Durchbrüche im Ringpol (Rp) entlang der Hubrichtung und quer zu dieser nicht gleichbleibend ist.

33. Magnetantrieb nach einem der Ansprüche 1 bis 32, dadurch gekennzeichnet, daß die Frontseiten der Ringpoldurchbrüche je nach Winkellage um die Hubachse Höhenveränderungen aufweisen.

34. Magnetantrieb nach einem der Ansprüche 1 bis 33, dadurch gekennzeichnet, daß der Ringpol (Rp) und / oder die Magnetkerne (2) mit einem nichtmagnetischen Stoff umspritzt sind, so daS ein Multifunktionskörper gebildet ist, der als Hubführung, Wickelkörper und Befestigungskörper für andere Funktionsteile dienen kann.

35. Magnetantrieb nach einem der Ansprüche 1 bis 34, dadurch gekennzeichnet, daß um einem oder mehrere weichmagnetische Teile (2, 4, 5 und 6) Kurzschlußwindungen untergebracht sind.

36. Magnetantrieb nach einem der Ansprüche 1 bis 35, dadurch gekennzeichnet, daß die Achsrichtung der Wicklungen (1) und / oder der Magnetkerne (2) in einem beliebigen Winkel zur Hubrichtung steht.

37. Magnetantrieb nach einem der Ansprüche 1 bis 36, dadurch gekennzeichnet, daß der Hubanker (3, 4) an einer Lamellenfeder (31) befestigt ist.

38. Magnetantrieb nach Anspruch 37, dadurch gekennzeichnet, daß die Lamellenfeder (31) an den Magnetkernen (2) entlanggeführt ist und durch progressive Abstützung an feststehenden Körpern (2, 10) ihre elastisch wirksame Länge ändert und eine hubabhängige Kraft auf den Hubanker (3, 4) ausübt.

39. Magnetantrieb nach einem der Ansprüche 29 bis 38, dadurch gekennzeichnet, daß die Luftspalte, innerhalb derer sich die Polstücke (4 und 4') bewegen, zu getrennten, elektromagnetisch voneinander unabhängig ansteuerbaren Magnetkreisen gehören.

40. Magnetantrieb für Schütze nach einem der Ansprüche 1 bis 18 und 26 bis 39, dadurch gekennzeichnet, daß in Richtung der Hubachse übereinander angeordnete, bewegliche Kontakte (21) vorgesehen sind.

41. Magnetantrieb nach einem der Ansprüche 1 bis 40, dadurch gekennzeichnet, daß die Wirkungsrichtung der permanentmagnetischen Kräfte (Pk) sich im Laufe des Ankerhubes ändert, wobei die negativen bzw. positiven Anteile dieser Kraft stark unterschiedlich sind.

42. Magnetantrieb nach einem der Ansprüche 1 bis 40, dadurch gekennzeichnet, daß die permanentmagnetischen Kräfte (Pk) entlang des Ankerhubes nur in einer Richtung wirken.

43. Magnetantrieb nach einem der Ansprüche 1 bis 42 mit untereinander beliebig schaltbaren Wicklungsteilen, dadurch gekennzeichnet, daß eine induktiv-kapazitive Wicklung (1) vorgesehen ist.

## Claims

1. A solenoid-operated mechanism consisting of at least one lifting armature (3, 4) magnetized in its direction of stroke, one permanent magnet (3) including two soft-magnetized pole pieces (4, 4'), travelling along a common axis between two electromagnetic external poles (5, 5') always magnetizable with the same polarity, arranged axially within the opening of a third electromagnetic pole arranged between the external poles (5, 5') and always energized by the opposite magnetic polarity in comparison with these, with this electromagnetic pole consisting of a soft-magnetic magnet core (2) and a ring pole (Rp) having an opening, with the ring pole (Rp) projecting from a winding (1) wound on a magnet core (2), characterized in that the permanent magnet (3) of the lifting armature (3, 4) consists of a material having a minimum remenant induction Br of 0.7 T and an energy product BHmax, reaching a minimum of 100 kJ/m³ and in that the permanent magnet (3) is disc-shaped and its maximum selected height in the direction of stroke only amounts to half its diameter.

2. A solenoid-operated mechanism according to Claim 1, characterized in that the soft-magnetic pole pieces (4, 4') of the lifting armature (3, 4), depending on the purpose of the mechanism, are of identical or different dimensions and that the geometry of these pole pieces (4) on their fronts facing the external poles (5) is adapted to the geometry of these external poles (5), with the geometry of these identical pole pieces (4, 4') corresponding to the geometry of the opposite circumferences of the opening in the ring pole (Rp) on the side facing the ring pole (Rp) ensuring that the magnetic reluctance of the magnetic paths between the permanent magnetic poles (4) and the electromagnetic external poles (5) and/or the ring pole (Rp) is as low as possible, eliminating a direct magnetic connection between the external poles (5) and the ring pole (Rp) due to the geometry of the magnetic poles (4, 5) and the ring pole (Rp).

3. A solenoid-operated mechanism according to Claims 1 and 2, characterized in that at least one of the pole pieces (4, 4') is extending radially beyond the circumference of the permanent magnet (3) to the space between the external poles (5) and the ring pole (Rp).

4. A solenoid-operated mechanism according to one of Claims 1 to 3, characterized in that the geometry of the pole pieces (4, 4') is conical, matching to the geometry of the external poles (5, 5') and/or the ring pole (Rp).

5. A solenoid-operated mechanism according to one of Claims 1 to 4, characterized in that the permanent magnet (3) and/or the pole pieces (4, 4') are enclosed by a thin non-magnetic sleeve (7).

6. A solenoid-operated mechanism according to Claim 5, characterized in that the sleeve (7) extends over the cylindrical continuations of the external poles (5, 5'), assuming the role of a mechanical guide and support for these and the ring pole (Rp).

7. A solenoid-operated mechanism according to Claim 6, characterized in that the non-magnetic sleeve (7) is simultaneously a functional part of a working device driven by a solenoid-operated mechanism.

8. A solenoid-operated mechanism having a minimum of one driven working device according to Claims 1 to 7, characterized in that the working device is arranged in the immediate vicinity of the pole area (4, 5) and the ring pole (Rp), thus forming one operational unit.

9. A solenoid-operated mechanism according to Claims 1 to 8, characterized in that it includes a minimum of two lifting armatures (3, 4) arranged within suitable ring pole-shaped floating openings (Rp) arranged on one or both sides of the magnet core (2), able to travel between external poles (5), arranged in their direction of stroke, by means of a single winding (1) and/or by externally supplied energy.

10. A solenoid-operated mechanism according to Claim 9, characterized in that one of the lifting armatures (3, 4) is used as a position indicator and/or for manual operation of the other lifting armatures.

11. A solenoid-operated mechanism according to Claims 1 to 10, characterized in that a non-magnetic unit having a geometry adapted to the actuating purpose, fastened to the ring pole (Rp) for reciprocal mechanical positioning of the magnetic units such as external poles (5), magnetic core (2), return yoke (6) and for positioning of all other components being part of the working device, thus realizing an actuating connection between these components in the area adjacent to the magnetic pole area over a mechanically short path.

12. A solenoid-operated mechanism according to Claims 1 to 11, characterized in that one or several static magnetic components (Rp, 2, 6, 5) consist of a stack of soft-magnetic metal sheets.

13. A solenoid-operated mechanism according to Claims 1 to 12, characterized in that the stroke of the lifting armature (3, 4) is controlled by electrical pulses of opposite polarity, sufficient duration and current.

14. A solenoid-operated mechanism according to Claim 13, characterized in that the actuating pulses are created by charging and/or discharging a capacity connected as a capacitor (30) in series with the winding (1) or arranged within the winding (1) if this is designed as an inductance-capacitance winding.

15. A solenoid-operated mechanism according to Claims 13 and 14, characterized in that the triggering of actuating pulses is controlled by the stroke position of the lifting armature (3, 4) and controlled by mechanical switches (26), non-contact ranging sensors or the evaluation of changes in the magnetic field within the magnetic circuit (Rp, 2, 6, 5).

16. A solenoid-operated mechanism according to Claim 14 including an electromechanical (26, 32) or electronic control unit, characterized in that a supply voltage, when applied, charges the pulse-generating capacity and/or affects the stroke of the lifting armature and when disabling this voltage, the discharge of the capactive charge in the winding of the mechanism is initiated, causing the return of the lifting armature (3, 4) to its starting position.

17. A solenoid-operated mechanism according to one of Claims 1 to 16, characterized in that springs are arranged to store lifting energy in the vicinity of the poles between the external poles (5, 5') and/or the ring pole (Rp) on the one hand and the lifting armature (3, 4) with or without a guide sleeve (7) on the other.

18. A solenoid-operated mechanism according to one of Claims 1 to 17, characterized in that non-magnetic stops are arranged between the pole pieces (4, 4') and the external poles (5, 5') or the ring pole (Rp).

19. A solenoid-operated mechanism for a displacement pump according to one of Claims 1 to 18, characterized in that a fastening unit (10) designed as a compression cylinder is arranged between the external pole (5) and the ring pole (Rp) in which the lifting armature (3, 4) is operating as a displacement piston by means of a seal (8) arranged on the pole piece (4), and in that the other pole piece (4) includes a spring (13) to store lifting energy.

20. A solenoid-operated mechanism for a double-acting displacement pump according to one of Claims 1 to 18, characterized in that two cylinders consisting of the fastening unit (10) are arranged between the external poles and the ring pole (Rp) in which the pole pieces (4, 4') of the lifting armature (3, 4), including seals (11) are acting as displacement pistons.

21. A solenoid-operated mechanism according to one of Claims 19 or 20, characterized in that displacement modules such as diaphragms or bellows are used instead of piston seals.

22. A solenoid-operated mechanism for seat valves according to one of Claims 1 to 18, characterized in that at least one valve chamber (15) is arranged around a ring pole (Rp) between the external poles (5, 5'), sealed against the environment and in that several pressure ports are connected to this valve chamber, with the ports included in the external poles (5, 5') being shut off by means of valve units (14) and with these valve units (14) being included in the pole pieces (4, 4') of the lifting armature (3, 4) acting as a valve unit, with the lifting armatures (3, 4) being enclosed in a non-magnetic guide sleeve, sliding across the continuations of the external poles (5), a sleeve including flow ports (o), allowing an unlimited flow between the valve chamber (15) and the valve unit (3, 4, 7, 15), which may be shut off, to the external ports (P, R, S), with the walls of the valve chamber (15) being formed by the geometry of the fastening unit (10).

23. A solenoid-operated mechanism according to one of Claims 1 to 18 for slide valves, characterized in that they include a non-magnetic fastening unit (10) to accommodate the ring pole (Rp), designed like a valve block including flow lines (P, A, B, R, S), in which at least one lifting armature (3, 4, 7), serving as a valve slide, is travelling, the pole pieces (4, 4') of which include openings for flow control.

24. A solenoid-operated mechanism according to one of Claims 1 to 18 for slide valves, characterized in that the lifting armature (3, 4) is activating at least one valve slide, operating in a valve block including flow lines, which is integrated in an external pole (5).

25. A solenoid-operated mechanism for mechanical clutches and/or brakes according to one of Claims 1 to 18, characterized in that the lifting armature (3, 4, 7) and at least one external pole (5) are rotating components of a drive train including connectable torque-transmitting discs (19, 20), with the discs (19) being jointly and axially displaceable together with the sleeve (7) of the lifting armature (3, 4), creating a non-slip contact with the rotating disc (20) or a stationary brake disc (24) and including units for the transmission of rotary movement (21, 22) attached to the lifting armature (3, 4, 7).

26. A solenoid-operated mechanism for electrical switchgear according to one of Claims 1 to 18, characterized in that the sleeve (7) of the lifting armature (3, 4) includes continuations to actuate floating contacts.

27. A solenoid-operated mechanism according to one of Claims 1 to 18 and 26, characterized in that the fastening unit (10) serves as a support for electrical contacts or contact blocks.

28. A solenoid-operated mechanism according to Claim 1, characterized in that the design of the lifting armature (3, 4) allows travel across the axis of the winding (1).

29. A solenoid-operated mechanism according to one of Claims 1 to 28, characterized in that several magnet cores (2) are projecting from the ring pole, each supporting a winding (1), with the opposite extremities of the magnet cores (2) always being of the same polarity, projecting from the windings (1) opposite to the ring pole, adjacent to the external yoke (6).

30. A solenoid-operated mechanism according to one of Claims 1 to 29, characterized in that the pole pieces (4) include voids based on matching minimum magnetic sections.

31. A solenoid-operated mechanism according to one of Claims 1 to 30, characterized in that the external poles (6) include openings larger than the circumference of the pole pieces (4) acting opposite to them.

32. A solenoid-operated mechanism according to one of Claims 1 to 31, characterized in that the section of the openings in the ring pole (Rp) is not identical in the direction of the stroke and in cross direction to the same.

33. A solenoid-operated mechanism according to one of Claims 1 to 32, characterized in that the faces of the ring pole openings change in height, depending on their angular position around the stroke axis.

34. A solenoid-operated mechanism according to one of Claims 1 to 33, characterized in that the ring pole (Rp) and/or the magnet cores (2) are spray-coated with a non-magnetic material thus forming a multi-function unit serving as a stroke guide, winding base and fastening device for other operational components.

35. A solenoid-operated mechanism according to one of Claims 1 to 34, characterized in that short-circuit windings are arranged around one or several soft-magnetic components (2, 4 5 and 6).

36. A solenoid-operated mechanism according to one of Claims 1 to 35, characterized in that the direction of the axis of the windings (1) and/or the magnet cores (2) is arranged in a random angle to the direction of stroke.

37. A solenoid-operated mechanism according to one of Claims 1 to 36, characterized in that the lifting armature (3, 4) is attached to a multi-disc spring (31).

38. A solenoid-operated mechanism according to Claim 37, characterized in that the multi-disc spring (31) is arranged along the magnet cores (2) and changes its effective elastic length by being progressively supported by the fixed units (2, 10), exerting its energy on the lifting armature (3, 4) depending on the stroke.

39. A solenoid-operated mechanism according to one of Claims 29 to 38, characterized in that the air gaps in which the pole pieces (4, 4') are travelling are part of separately controlled magnetic circuits which are controlled electromagnetically independent from each other.

40. A solenoid-operated mechanism for contactors according to one of Claims 1 to 18 and 26 to 39, characterized in that floating contacts (21) are arranged above each other over the stroke axis.

41. A solenoid-operated mechanism according to one of Claims 1 to 40, characterized in that the operating direction of permanent-magnetic forces (Pk) changes over the stroke of the armature, with the negative and/or positive components of this force differing considerably.

42. A solenoid-operated mechanism according to one of Claims 1 to 40, characterized in that the permanent-magnetic forces (Pk) are only acting in one direction over the stroke of the armature.

43. A solenoid-operated mechanism according to one of Claims 1 to 42 including randomly controlled winding sections, characterized in that they include an inductance-capacitance winding (1).

## Revendications

1. Entraînement magnétique comportant au moins une armature mobile (3, 4) magnétisée dans le sens du déplacement, constituée d'un aimant permanent (3) comportant deux pièces formant pôles (4, 4') à magnétisme doux, armature qui peut se déplacer, le long d'un axe commun, entre deux pôles externes (5, 5') électromagnétiques, pouvant être constamment magnétisés avec la même polarité, et qui, en outre, est disposé axialement à l'intérieur d'un perçage d'un troisième pôle d'électroaimant ce pôle qui est situé entre les pôles externes (5, 5') et pouvant être excité avec une polarité magnétique opposée par rapport à ceux-ci, étant constitué d'un noyau magnétique (2) et d'un pôle annulaire (Rp) présentant le perçage, étant entendu que le pôle annulaire (Rp) dépasse d'une bobine (1) enroulée sur le noyau magnétique (2),
caractérisé en ce que
l'aimant permanent (3) de l'armature mobile (3, 4) est constitué d'un matériau présentant une induction rémanente minimale Br de 0,7 T pour une énergie BHmax qui atteint au moins 100 kJ/m3, en ce que l'aimant permanent (3) est réalisé sous la forme d'un disque et en ce que sa hauteur, en regardant dans la direction de déplacement, est choisie au moins aussi grande que la moitié de son diamètre.

2. Entraînement magnétique suivant la revendication 1, caractérisé en ce que, suivant la destination de l'entraînement, les pièces formant pôles (4, 4') à magnétisme doux de l'armature mobile (3, 4) ont les mêmes dimensions, ou des dimensions différentes, et en ce que la forme de ces pièces formant pôles (4), sur leur face frontale, tournées vers les pôles externes (5), est adapté à la forme de ces pôles externes (5), étant entendu que la forme de ces pièces identiques formant pôles (4, 4') est adapté sur la face tournée vers le pôle annulaire (Rp), correspondant à la forme du contour, qui lui fait face, du perçage dans le pôle annulaire (Rp), de telle façon que la réluctance des trajets magnétiques entre les pôles (4) à magnétisme permanent et les pôles externes (5) électromagnétiques, et celle du pôle annulaire (Rp), est la plus faible possible, et que, grâce à la forme donnée aux pôles magnétiques (4, 5) et au pôle annulaire (Rp),le passage direct des lignes de champ magnétique entre les pôles externes (5) et le pôle annulaire (Rp) est le plus réduit possible

3. Entraînement magnétique suivant la revendication 1 ou la revendication 2, caractérisé en ce qu'au moins l'une des pièces formant pôles (4, 4,) s'étend radialement, sur la périphérie de l'aimant permanent (3), dans l'espace compris entre les pôles externes (5) et le pôle annulaire (Rp).

4. Entraînement magnétique suivant l'une quelconque des revendications 1 à 3, caractérisé en ce que la forme des pièces formant pôles (4, 4') est conique, correspondant à la forme respective des pôles externes (5, 5') ou du pôle annulaire (Rp).

5. Entraînement magnétique suivant l'une quelconque des revendications 1 à 4, caractérisé en ce que l'aimant permanent (3) et/ou les pièces formant pôles (4, 4') sont enveloppés dans une gaine mince (7), non magnétique.

6. Entraînement magnétique suivant la revendication 5, caractérisé en ce que la gaine (7) s'étend sur des prolongements des pôles externes (5, 5')' et en ce qu'elle assumme le rôle d'un guide mécanique et d'un palier par rapport à ces pôles externes ou par rapport au pôle annulaire (Rp).

7. Entraînement magnétique suivant la revendication 6, caractérisé en ce que la gaine (7) non magnétique sert, en même temps, de pièce fonctionnelle pour un organe de travail entraîné par l'entraînement magnétique.

8. Entraînement magnétique, comportant au moins un organe de travail entraîné, suivant l'une quelconque des revendications 1 à 7, caractérisé en ce que l'organe de travail est installé directement à proximité de la zone des pôles (4, 5) et du pôle annulaire (Rp), de façon à former une unité de construction fonctionnelle.

9. Entraînement magnétique suivant les revendications 1 à 8, caractérisé en ce qu'il comporte au moins deux armatures mobiles (3, 4), disposées mobiles à l'intérieur de perçages correspondants formant pôles annulaires (Rp) qui se trouvent sur un ou les deux côtés du noyau magnétique (2), ces armatures pouvant se déplacer, à l'aide d'un unique bobinage (1) et/ou sous l'action de forces extérieures, entre des pôles externes (5) installés dans le sens du déplacement.

10. Entraînement magnétique suivant la revendication 9, caractérisé en ce que l'une des armatures mobiles (3, 4) sert d'indicateur de position et/ou de moyen d'actionnement manuel des autres armatures mobiles.

11. Entraînement magnétique suivant l'une quelconque des revendications 1 à 10, caractérisé en ce que, pour le positionnement mécanique réciproque des pièces magnétiquement associées, telles que pôles externes (5), noyau magnétique (2), culasse de liaison (6), ainsi que pour le positionnement d'autres pièces appartenant à l'organe de travail, il est installé un corps non magnétique, fixé sur le pôle annulaire (Rp), d'une conception adaptée au but d'entraînement recherché, et qui, sur une courte distance mécanique courte, réalise une liaison par conjugaison de forces entre ces pièces dans la zone proche des pôles magnétiques.

12. Entraînement magnétique suivant l'une quelconque des revendications 1 à 11, caractérisé en ce qu'une ou plusieurs pièces magnétiques non mobiles (Rp, 2, 6, 5) sont réalisées à partir de tôles à magnétisme doux, empilées.

13. Entraînement magnétique suivant l'une quelconque des revendications 1 à 12, caractérisé en ce que le mouvement d'aller et retour de l'armature mobile (3, 4) est commandé par des impulsions électriques de polarité alternative d'une durée et d'une intensité de courant convenables.

14. Entraînement magnétique suivant la revendication 13, caractérisé en ce que les impulsions d'actionnement sont créées par la charge et la décharge d'une capacité, qui est sous la forme d'un condensateur (30) branchée en série avec le bobinage (1), qui se trouve à l'intérieur du bobinage (1) si ce dernier est réalisé sous la forme d'un bobinage capacitif inductif.

15. Entraînement magnétique suivant la revendication 13 et la revendication 14, caractérisé en ce que l'émission des impulsions d'actionnement est commandée par la position, dans sa course de l'armature mobile (3, 4), et est déterminée par des organes de coupure mécaniques, par des détecteurs de distance sans contact, ou par exploitation des modifications du champ magnétique dans le circuit magnétique (Rp, 2, 6, 5).

16. Entraînement magnétique suivant la revendication 14, comportant une commande électromagnétique (26, 32) ou électronique, caractérisé en ce qu'en appliquant une tension d'alimentation, celle-ci provoque la charge de la capacité fournissant les impulsions et le déplacement de l'armature mobile, et en ce que la coupure de cette tension provoque la décharge de la charge capacitive dans le bobinage de l'entraînement, provoquant ainsi le retour de l'armature mobile (3, 4) dans sa position initiale.

17. Entraînement magnétique suivant l'une quelconque des revendications 1 à 16, caractérisé en ce que des ressorts pour emmagasiner l'énergie de déplacement sont installés dans l'espace proche des pôles, situé entre les pôles externes (5, 5,) et/ou le pôle annulaire (Rp), d'une part, et l'armature mobile (3, 4) avec ou sans gaine de guidage (7), d'autre part.

18. Entraînement magnétique suivant l'une quelconque des revendications 1 à 17, caractérisé en ce que des pièces non magnétiques formant butées sont prévues entre les pièces formant pôles (4, 4') et les pôles externes (5, 5') ou le pôle annulaire (Rp).

19. Entraînement magnétique pour une pompe volumétrique, suivant l'une quelconque des revendications 1 à 18, caractérisé en ce qu'entre le pôle externe (5) et le pôle annulaire (Rp), est prévu un corps de maintien (10), réalisé sous la forme d'un cylindre de compression, dans lequel l'armature mobile (3, 4) agit comme piston de refoulement gràce à un organe d'étanchéité (8) monté sur la pièce formant pôle (4), et en ce que l'autre pièce formant pôle (4) reçoit un ressort (13) pour emmagasiner l'énergie de déplacement.

20. Entraînement magnétique pour une pompe volumétrique, suivant l'une quelconque des revendications 1 à 18, caractérisé en ce qu'entre le pôle externe (5) et le pôle annulaire (Rp), sont prévus deux cylindres, réalisés à partir du corps de maintien (10), dans lesquels les pièces formant pôles (4, 4') de l'armature mobile (3, 4), équipées d'organes d'étanchéité (11), agissent comme pistons de refoulement.

21. Entraînement magnétique suivant la revendication 19 ou la revendication 20, caractérisé en ce qu'à la place d'organes d'étanchéité de pistons, sont montés des organes de refoulement, tels que des membranes ou des soufflets.

22. Entraînement magnétique pour soupapes à siège, suivant l'une quelconque des revendications 1 à 18, caractérisé en ce qu'il est prévu au moins une chambre à soupape (15), montée, de façon étanche par rapport à l'environnement, autour d'un pôle annulaire (Rp), entre les pôles externes (5, 5'), et en ce que, dans cette chambre à soupape, débouchent différentes canalisations sous pression, les raccordements pratiqués dans les pôles externes (5, 5') étant obturables au moyen d'organes formant soupapes (14), et ces organes formant soupapes (14) étant réalisés dans les pièces formant pôles (4, 4') de l'armature mobile (3, 4) servant d'organe de soupape, cette armature mobile (3, 4) étant prise dans une gaine de guidage non magnétique glissant sur des prolongements des pôles externes (5), gaine qui est munie d'orifices d'écoulement (o) qui permettent un écoulement libre entre la chambre à soupape (15) et les raccords (P, R, S) obturables par l'organe formant soupape (3, 4, 7, 14) et conduisant vers l'extérieur, étant entendu que les paroi de la chambre à soupape (15) sont réalisées par formage du corps de maintien (10).

23. Entraînement magnétique suivant l'une quelconque des revendications 1 à 18, pour soupapes à tiroir, caractérisé en ce qu'il est prévu un corps de maintien (10) non magnétique qui reçoit le pôle annulaire (Rp), et qui est réalisé sous la forme d'un bloc-soupape comportant des conduites d'écoulement (P, A, B, R, S), et où se déplace au moins une armature mobile (3, 4, 7) servant de tiroir de soupape, dans les pièces formant pôles (4, 4') de laquelle sont usinés des évidements destinés à commander les écoulements.

24. Entraînement magnétique suivant l'une quelconque des revendications 1 à 18, pour soupapes à tiroir, caractérisé en ce que l'armature mobile (3, 4) entraîne au moins un tiroir de soupape, qui fonctionne dans un bloc-soupape muni de conduites d'écoulement, qui est usiné dans un pôle externe (5).

25. Entraînement magnétique pour accouplements et/ou freins mécaniques, suivant l'une quelconque des revendications 1 à 18, caractérisé en ce que l'armature mobile (3, 4, 7) et au moins un pôle externe (5) sont des pièces tournantes d'une ligne d'entraînement, pièces qui présentent des disques (19, 20) pouvant être embrayés ensemble et transmettre un couple de rotation, le disque (19) étant solidaire de la gaine (7) de l'armature mobile (3, 4) et pouvant se déplacer axialement pour pouvoir entrer en contact sans glissement avec le disque tournant (20), ou avec un disque de frein (24) fixe, et en ce que, sur l'armature mobile (3, 4), sont fixés des organes pour transmettre le mouvement de rotation (21, 22).

26. Entraînement magnétique pour des organes de coupure électriques, suivant l'une quelconque des revendications 1 à 18, caractérisé en ce que la gaine (7) de l'armature mobile (3, 4) présente des prolongements pour entraîner des contacts mobiles.

27. Entraînement magnétique suivant l'une quelconque des revendications 1 à 18 et 26, caractérisé en ce que le corps de maintien (10) sert de corps de réception pour des contacts électriques ou des blocs-contacts.

28. Entraînement magnétique suivant la revendication 1, caractérisé en ce que l'armature mobile (3, 4) est guidé de telle façon que son mouvement se fasse transversalement à l'axe du bobinage (1).

29. Entraînement magnétique suivant l'une quelconque des revendications 1 à 28, caractérisé en ce que plusieurs noyaux magnétiques (2) dépassent du pôle annulaire et portent chacun un bobinage (1), étant entendu que les extrémités des noyaux magnétiques (2) qui peuvent être polarisés constament de la même façon, et sortent du bobinage (1) à l'opposé du pôle annulaire, se trouvent en limite d'une culasse extérieure (6).

30. Entraînement magnétique suivant l'une quelconque des revendications 1 à 29, caractérisé en ce que les pièces formant pôles (4, 4') présentent des volumes creux tenant compte de sections minimales du point de vue magnétique.

31. Entraînement magnétique suivant l'une quelconque des revendications 1 à 30, caractérisé en ce que les pôles externes (5) présentent des perçages qui sont plus grands que le périphérie leur faisant face des pièce formant pôle (4).

32. Entraînement magnétique suivant l'une quelconque des revendications 1 à 31, caractérisé en ce que la section des perçages dans le pôle annulaire (Rp) n'est pas constante le long de la direction du déplacement, ni perpendiculairement à celui-ci.

33. Entraînement magnétique suivant l'une quelconque des revendications 1 à 32, caractérisé en ce que les faces frontales des perçages du pôle annulaire présentent chacune des différences de hauteur en fonction de leur position angulaire autour de l'axe de déplacement.

34. Entraînement magnétique suivant l'une quelconque des revendications 1 à 33, caractérisé en ce que le pôle annulaire (Rp) et/ou les noyaux magnétiques (2) sont enrobés dans une matière non magnétique, de façon à former un corps à fonctions multiples qui peut servir de guidage pour le déplacement, de corps de bobinage et de corps de fixation pour d'autres pièces de fonctionnement.

35. Entraînement magnétique suivant l'une quelconque des revendications 1 à 34, caractérisé en ce que des bobines en court-circuit sont déposées autour d'une ou plusieurs pièces (2, 4, 5 et 6) à magnétisme doux.

36. Entraînement magnétique suivant l'une quelconque des revendications 1 à 35, caractérisé en ce que la direction de l'axe des bobinages (1) et/ou des noyaux magnétiques (2) présente un angle choisi à volonté par rapport à la direction de déplacement.

37. Entraînement magnétique suivant l'une quelconque des revendications 1 à 36, caractérisé en ce que l'induit de levée (3, 4) est fixé sur un ressort à lame (31).

38. Entraînement magnétique suivant la revendication 37, caractérisé en ce que le ressort à lame (31) est guidé le long des noyaux magnétiques (2) et que sa longueur élastique effective se modifie en s'appuyant progressivement sur des corps fixes (2, 10), et exerce sur l'armature mobile (3, 4) une force dépendant de la course.

39. Entraînement magnétique suivant l'une quelconque des revendications 29 à 38, caractérisé en ce que les entrefers, à l'intérieur desquelles se déplacent les pièces formant pôles (4 et 4'), appartiennent à des circuits magnétiques séparés, commandables électromagnétiquement indépendamment les uns des autres.

40. Entraînement magnétique pour contacteurs, suivant l'une quelconque des revendications 1 à 18 et 26 à 39, caractérisé en ce que, dans la direction de l'axe de déplacement, sont prévus des contacts mobiles (21), disposés les uns au-dessus des autres.

41. Entraînement magnétique suivant l'une quelconque des revendications 1 à 40, caractérisé en ce que le sens de l'action des forces magnétiques permanentes (Pk) se modifie au cours de la course de l'armature mobile, les composantes négatives et positives de cette force étant fortement différentes.

42. Entraînement magnétique suivant l'une quelconque des revendications 1 à 40, caractérisé en ce que les forces magnétiques permanentes (Pk) agissent dans une seule direction, le long de la course de l'armature mobile.

43. Entraînement magnétique suivant l'une quelconque des revendications 1 à 42, comportant des parties de bobinage (1) que l'on peut connecter entre elles à volonté, caractérisé en ce qu'un bobinage (1) inductif capacitif est prévu.
